# EUROPEAN PATENT APPLICATION

(11) **EP 4 418 514 A1**
(43) Date of publication of application: **21.08.2024**
(21) Application number: 23741244.0
(22) Date of filing: 10.01.2023
(51) Int. Cl.: H02M 1/32, H02M 1/00, H02M 3/156, H02H 7/12

(54) **PHOTOVOLTAIC INVERTER AND POWER CONTROL METHOD**

(30) Priority: 04.01.2023 CN 202310007315
(71) Applicant: Huawei Digital Power Technologies Co., Ltd., Shenzhen, Guangdong 518043 (CN)
(72) Inventor: HUI, Libin, Shenzhen, Guangdong 518043 (CN); SHI, Hui, Shenzhen, Guangdong 518043 (CN); HU, Tianqi, Shenzhen, Guangdong 518043 (CN); TAN, Xiaojin, Shenzhen, Guangdong 518043 (CN); CHEN, Hu, Shenzhen, Guangdong 518043 (CN)
(74) Representative: Gill Jennings & Every LLP
(86) International application number: PCT/CN2023/071660
(87) International publication number: WO 2024/145954

(57) **Abstract**

This application provides a photovoltaic inverter and a power control method. The photovoltaic inverter includes an inverter circuit, a plurality of voltage conversion circuits, a plurality of acquisition circuits, and a control circuit. One voltage conversion circuit includes at least one switch. The plurality of acquisition circuits are configured to detect an input voltage of a target voltage conversion circuit and a voltage of a bus (bus). The control circuit is configured to: regulate a current threshold of the target voltage conversion circuit based on the input voltage of the target voltage conversion circuit and the voltage of the bus (bus); and when an input current of the target voltage conversion circuit is greater than or equal to the current threshold of the target voltage conversion circuit, regulate turn-on or turn-off of the switch in the target voltage conversion circuit to reduce a current or input power of the target voltage conversion circuit. According to this application, when the input current of the target voltage conversion circuit is greater than or equal to the current threshold of the target voltage conversion circuit, the input power of the voltage conversion circuit can be reduced to ensure power supply safety and improve stability and power supply efficiency of the photovoltaic inverter. A structure is simple, the method is simple, and applicability is high.

## Description

This application claims priority to Chinese Patent Application No. 202310007315.8, filed with the China National Intellectual Property Administration on January 4, 2023 and entitled "PHOTOVOLTAIC INVERTER AND POWER CONTROL METHOD", which is incorporated herein by reference in its entirety.

### TECHNICAL FIELD

This application relates to the field of power electronics technologies, and in particular, to a photovoltaic inverter and a power control method.

### BACKGROUND

In the field of power electronics technologies, an inverter circuit in a photovoltaic inverter is usually used to convert direct current energy into alternating current energy, so that electric energy can be transmitted between a power supply and a load. For example, in the field of photovoltaic power supply, a photovoltaic inverter may convert direct current energy output by a direct current power supply (for example, a photovoltaic (Photovoltaic, PV) panel) into alternating current energy, and provide the alternating current energy for a load or a power grid to use. Generally, a control circuit (for example, a maximum power point tracking (Maximum Power Point Tracking, MPPT) control circuit) in the photovoltaic inverter controls an output current of the PV panel (namely, an input current of the photovoltaic inverter) based on an output voltage of the PV panel (namely, an input voltage of the photovoltaic inverter), so that the PV panel outputs electric energy to the load at maximum power. In a process of research and practice, the inventor of this application finds that in the conventional technology, the photovoltaic inverter usually converts, by using a plurality of voltage conversion circuits, a direct current voltage provided by each group of PV panels into a direct current bus voltage (for example, boosts and converts the voltage of each group of PV panels into the bus (bus) voltage), and then converts direct current energy into alternating current energy by using an inverter circuit, to adapt to voltages of various loads. There is a difference between the groups of PV panels (for example, lengths are different, or light intensities are different). Therefore, when a difference between an output voltage of a PV panel connected to a voltage conversion circuit (namely, an input voltage of the voltage conversion circuit) and the bus (bus) voltage is excessively large, an input current in the voltage conversion circuit is usually high. Consequently, a fault or damage may be brought to an element in the voltage conversion circuit (for example, a switch in the voltage conversion circuit) due to overvoltage, overcurrent, or overheat.

### SUMMARY

This application provides a photovoltaic inverter and a power control method. When an input current of a target voltage conversion circuit is greater than or equal to a current threshold of the target voltage conversion circuit, a duty cycle of a switch may be regulated through a control circuit to reduce input power of the voltage conversion circuit, thereby improving stability and power supply efficiency of the photovoltaic inverter while ensuring power supply safety. A structure is simple, the method is simple, and applicability is high.

According to a first aspect, this application provides a photovoltaic inverter. The photovoltaic inverter may include an inverter circuit, a plurality of voltage conversion circuits, a plurality of acquisition circuits, and a control circuit. One voltage conversion circuit may include at least one switch. Herein, one end of each voltage conversion circuit may be configured to be correspondingly connected to each of a plurality of groups of photovoltaic panels. The other end of each voltage conversion circuit may be configured to be connected in parallel to a bus (bus) and then connected to a load through the inverter circuit. The plurality of acquisition circuits may be connected to the control circuit and configured to detect voltages or currents of the plurality of voltage conversion circuits and the bus (bus). The control circuit is connected to the switch in each voltage conversion circuit. Herein, the plurality of acquisition circuits may be configured to detect an input voltage of a target voltage conversion circuit and the voltage of the bus (bus). The target voltage conversion circuit is any one or more of the plurality of voltage conversion circuits. Herein, the control circuit may regulate a current threshold of the target voltage conversion circuit based on the input voltage of the target voltage conversion circuit and the voltage of the bus (bus). Herein, the control circuit may be further configured to: when an input current of the target voltage conversion circuit is greater than or equal to the current threshold of the target voltage conversion circuit, regulate a duty cycle of the switch in the target voltage conversion circuit to regulate turn-on or turn-off of the switch in the target voltage conversion circuit, to reduce a current or input power of the target voltage conversion circuit.

In this application, a photovoltaic panel may be connected to a load as a direct current power supply through a photovoltaic inverter. The photovoltaic inverter may convert direct current energy provided by the photovoltaic panel into alternating current energy, and provide the alternating current energy for the load. Herein, the photovoltaic inverter may include an inverter circuit and a plurality of voltage conversion circuits. The direct current power supply may include a plurality of groups of photovoltaic panels (each group of photovoltaic panels may include one photovoltaic panel or a plurality of photovoltaic panels). Each group of photovoltaic panels may be connected to the inverter circuit through one voltage conversion circuit. The voltage conversion circuit may convert a direct current voltage provided by the photovoltaic panel into a bus (bus) voltage, and then convert direct current energy into alternating current energy through the inverter circuit, so that an alternating current voltage output by the photovoltaic inverter may adapt to loads in a plurality of voltage ranges. In an application scenario including a plurality of groups of photovoltaic panels, there is a difference between the groups of photovoltaic panels (for example, lengths are different, shapes are different, or light intensities are different). Therefore, when a difference between an output voltage of a photovoltaic panel connected to a voltage conversion circuit (namely, an input voltage of the voltage conversion circuit) and the bus (bus) voltage is excessively large, an input current in the voltage conversion circuit is usually high. Consequently, a fault or damage may be brought to an element in the voltage conversion circuit (for example, a switch in the voltage conversion circuit) due to overvoltage (a voltage difference is excessively large), overcurrent (a current is excessively high), or overheat (a temperature is excessively high). Herein, the photovoltaic inverter may further include a control circuit and an acquisition circuit. The acquisition circuit may detect a power supply parameter of the photovoltaic inverter (for example, an input voltage and/or an output voltage of the voltage conversion circuit, an input current and/or an output current of the voltage conversion circuit, a temperature of the voltage conversion circuit, a voltage and/or a current of the bus (bus), an input voltage and/or an output voltage of the inverter circuit, an input current and/or an output current of the inverter circuit, and a temperature of the inverter circuit). Herein, the control circuit may determine a working state of the photovoltaic inverter based on the power supply parameter of the photovoltaic inverter. Herein, an example in which one (or more) voltage conversion circuit that needs to be controlled by the control circuit is a target voltage conversion circuit is used. The control circuit may regulate a current threshold of the target voltage conversion circuit based on an input voltage of the target voltage conversion circuit and the voltage of the bus (bus). After the current threshold of the target voltage conversion circuit is obtained, when an input current of the target voltage conversion circuit is greater than or equal to the current threshold of the target voltage conversion circuit, to protect working safety of the voltage conversion circuit, the control circuit may regulate a duty cycle of a switch in the target voltage conversion circuit (for example, reduce the duty cycle of the switch in the target voltage conversion circuit) to regulate turn-on or turn-off of the switch in the target voltage conversion circuit, to reduce a current or input power of the target voltage conversion circuit.

According to this application, when the input current of the target voltage conversion circuit is greater than or equal to the current threshold of the target voltage conversion circuit, the photovoltaic inverter may regulate the duty cycle of the switch through the control circuit to reduce the input power of the voltage conversion circuit, thereby improving stability and power supply efficiency of the photovoltaic inverter while ensuring power supply safety. A structure is simple, a method is simple, and applicability is high.

With reference to the first aspect, in a first possible implementation, the acquisition circuit may be further configured to detect a temperature of the target voltage conversion circuit. The control circuit may be further configured to: when the temperature of the target voltage conversion circuit is greater than or equal to a temperature threshold, regulate the current threshold of the target voltage conversion circuit to a first current threshold based on the input voltage of the target voltage conversion circuit and the voltage of the bus (bus). It may be understood that the control circuit may determine a working state of the target voltage conversion circuit in a plurality of manners, and further determine whether the input power (or the input current) of the target voltage conversion circuit needs to be controlled. In other words, the control circuit may determine the working state of the target voltage conversion circuit in the plurality of manners, and further determine whether the duty cycle of the switch in the target voltage conversion circuit needs to be regulated. For example, when the input current of the target voltage conversion circuit is greater than or equal to the current threshold of the target voltage conversion circuit, it may be considered that the target voltage conversion circuit is in a working state in which the input power needs to be reduced (or in other words, the switch in the target voltage conversion circuit works in a harsh environment, and will be damaged at a high risk if continuing to work). In this case, the control circuit needs to reduce the input current and/or the input power of the target voltage conversion circuit. Herein, when a working temperature of the switch in the target voltage conversion circuit is different, an input current bearable by the switch may be different even if a voltage difference borne by the switch is the same. For example, when the working temperature of the switch in the target voltage conversion circuit is high (for example, the temperature of the target voltage conversion circuit is greater than or equal to the temperature threshold), the control circuit may determine, based on the voltage difference (for example, a difference between the input voltage of the target voltage conversion circuit and the voltage of the bus (bus)) borne by the switch in the target voltage conversion circuit, a maximum input current (for example, the first current threshold) bearable by the switch in the target voltage conversion circuit. It should be noted that a value of the first current threshold may be determined based on the maximum input current of the switch in the target voltage conversion circuit (for example, determined based on corresponding nominal currents when switches of various models bear different voltage differences), or may be determined based on the current threshold obtained by the photovoltaic inverter in a manner of obtaining, acquiring, receiving, detecting, storing, or the like. For example, the photovoltaic inverter or an external central control system may calculate a curve of corresponding current thresholds when the switch bears different voltage differences at a specific working temperature or in a specific working temperature range (for example, in a first working temperature range greater than or equal to the temperature threshold) in a working process (or a design process) of the voltage conversion circuit. Further, the control circuit may obtain the first current threshold based on the curve. The first current threshold may be specifically set based on an application scenario. It may be understood that the first current threshold herein may be one current, may be a plurality of discrete currents, or may be a current range including a plurality of discrete currents or continuous currents.

In this application, when the working temperature of the switch in the target voltage conversion circuit is high (for example, the temperature of the target voltage conversion circuit is greater than or equal to the temperature threshold), if an input current of the switch in the target voltage conversion circuit is greater than or equal to the first current threshold, it indicates that the target voltage conversion circuit is in a working state in which the target voltage conversion circuit needs to be regulated, and the control circuit may reduce the duty cycle of the switch in the target voltage conversion circuit to further reduce the input power of the target voltage conversion circuit, to avoid an element in the target voltage conversion circuit being damaged by overheat and improve safety of the target voltage conversion circuit. In addition, the control circuit does not completely cut off input electric energy of the target voltage conversion circuit. This ensures electric energy transmission efficiency on the basis of ensuring safety.

With reference to the first possible implementation of the first aspect, in a second possible implementation, the control circuit may be further configured to: when the temperature of the target voltage conversion circuit is less than the temperature threshold, regulate the current threshold of the target voltage conversion circuit to a second current threshold based on the input voltage of the target voltage conversion circuit and the voltage of the bus (bus). The second current threshold is greater than or equal to the first current threshold. It may be understood that the control circuit may determine the working state of the target voltage conversion circuit in the plurality of manners, and further determine whether the input power (or the input current) of the target voltage conversion circuit needs to be controlled. In other words, the control circuit may determine the working state of the target voltage conversion circuit in the plurality of manners, and further determine whether the duty cycle of the switch in the target voltage conversion circuit needs to be regulated. For example, when the input current of the target voltage conversion circuit is greater than or equal to the current threshold of the target voltage conversion circuit, it may be considered that the target voltage conversion circuit is in the working state in which the input power needs to be reduced (or in other words, the switch in the target voltage conversion circuit works in a harsh environment, and will be damaged at a high risk if continuing to work). In this case, the control circuit needs to reduce the input current and/or the input power of the target voltage conversion circuit. Herein, when the working temperature of the switch in the target voltage conversion circuit is different, the input current bearable by the switch may be different even if the voltage difference borne by the switch is the same. For example, when the working temperature of the switch in the target voltage conversion circuit is low (for example, the temperature of the target voltage conversion circuit is less than the temperature threshold), the control circuit may determine, based on the voltage difference (for example, the difference between the input voltage of the target voltage conversion circuit and the voltage of the bus (bus)) borne by the switch in the target voltage conversion circuit, the maximum input current (for example, the second current threshold) bearable by the switch in the target voltage conversion circuit. Herein, the second current threshold is less than or equal to the first voltage threshold. It should be noted that a value of the second current threshold may be determined based on the maximum input current of the switch in the target voltage conversion circuit (for example, determined based on the corresponding nominal currents when the switches of the various models bear the different voltage differences), or may be determined based on the current threshold obtained by the photovoltaic inverter in the manner of obtaining, acquiring, receiving, detecting, storing, or the like. For example, the photovoltaic inverter or the external central control system may calculate the curve of the corresponding current thresholds when the switch bears the different voltage differences at the specific working temperature or in the specific working temperature range (for example, in a second working temperature range less than the temperature threshold) in the working process (or the design process) of the voltage conversion circuit. Further, the control circuit may obtain the second current threshold based on the curve. The second current threshold may be specifically set based on the application scenario. It may be understood that the second current threshold herein may be one current, may be a plurality of discrete currents, or may be a current range including a plurality of discrete currents or continuous currents.

In this application, when the working temperature of the switch in the target voltage conversion circuit is low (for example, the temperature of the target voltage conversion circuit is less than the temperature threshold), if the input current of the switch in the target voltage conversion circuit is greater than or equal to the second current threshold, it indicates that the target voltage conversion circuit is in the working state in which the target voltage conversion circuit needs to be regulated, and the control circuit may reduce the duty cycle of the switch in the target voltage conversion circuit to further reduce the input power of the target voltage conversion circuit, to avoid the element in the target voltage conversion circuit being damaged by overheat and improve safety of the target voltage conversion circuit. In addition, the control circuit does not completely cut off the input electric energy of the target voltage conversion circuit. This ensures electric energy transmission efficiency on the basis of ensuring the safety.

With reference to the first aspect or any possible implementation of the first aspect, in a third possible implementation, the control circuit may be further configured to: when the input current of the target voltage conversion circuit is greater than or equal to the current threshold of the target voltage conversion circuit, generate a switching-modulation signal based on the input current of the target voltage conversion circuit and the current threshold of the target voltage conversion circuit, and control the duty cycle of the switch in the target voltage conversion circuit based on the switching-modulation signal to regulate turn-on or turn-off of the switch in the target voltage conversion circuit. Herein, the control circuit (for example, a current regulation loop (for example, a proportional regulation circuit or a proportional integral regulation circuit) and a driving-control circuit, or another circuit with a current regulation function and a driving-control function) may generate the switching-modulation signal based on the input current of the target voltage conversion circuit and the current threshold of the target voltage conversion circuit to control the duty cycle of the switch in the target voltage conversion circuit. For example, when the input current of the target voltage conversion circuit is greater than or equal to the current threshold of the target voltage conversion circuit, the control circuit may generate, based on the current threshold of the target voltage conversion circuit, a reference value less than the current threshold, and generate, by using the input current of the target voltage conversion circuit as a variable that needs to be regulated, the switching-modulation signal to control the duty cycle of the switch in the target voltage conversion circuit based on the switching-modulation signal, to regulate the input current in the target voltage conversion circuit to be less than the current threshold (namely, the foregoing reference value) of the target voltage conversion circuit. Herein, the control circuit may generate a signal such as a pulse width modulation (Pulse Width Modulation, PWM) wave as the switching-modulation signal, or generate a driving pulse signal as the switching-modulation signal based on the PWM wave. Herein, the switching-modulation signal may control the duty cycle of the switch in the target voltage conversion circuit, and further control the input current and/or the input power of the target voltage conversion circuit. For example, the control circuit may reduce the duty cycle of the switch in the target voltage conversion circuit to reduce the input current of the target voltage conversion circuit, to reduce the input power of the target voltage conversion circuit. It may be understood that the control circuit provided in this application may use a discontinuous pulse width modulation (Discontinuous Pulse Width Modulation, DPWM) wave as the switching-modulation signal, or may use another PWM wave (for example, a sinusoidal pulse width modulation (Sinusoidal Pulse Width Modulation, SPWM) wave, a third harmonic injection pulse width modulation (Third Harmonic Injection Pulse Width Modulation, THIPWM) wave, or a carrier-based space vector pulse width modulation (Carrier Based Space Vector Pulse Width Modulation, CBPWM) wave) as the switching-modulation signal, or may use a driving pulse signal generated based on these PWM waves as the switching-modulation signal. An application range is wide, and a control effect is good.

With reference to the first aspect or any possible implementation of the first aspect, in a fourth possible implementation, the control circuit may be further configured to: when the input current of the target voltage conversion circuit is less than the current threshold of the target voltage conversion circuit, regulate the duty cycle of the switch in the target voltage conversion circuit to regulate turn-on or turn-off of the switch in the target voltage conversion circuit, so that the input power of the target voltage conversion circuit remains at maximum target input power.

Herein, when the input current of the target voltage conversion circuit is less than the current threshold (for example, a third current threshold) of the target voltage conversion circuit, it may be considered that the target voltage conversion circuit is in a working state in which the input power does not need to be reduced (or in other words, the switch in the target voltage conversion circuit works in a safe environment at a low risk of damage). In this case, the control circuit may regulate the duty cycle of the switch in the target voltage conversion circuit, so that the input power of the target voltage conversion circuit remains at the maximum target input power (for example, the photovoltaic panel connected to the target voltage conversion circuit works at a maximum power point). Herein, a value of the third current threshold may be determined based on the maximum input current of the switch in the target voltage conversion circuit (for example, determined based on the corresponding nominal currents when the switches of various models bear the different voltage differences), or may be determined based on the current threshold obtained by the photovoltaic inverter in the manner of obtaining, acquiring, receiving, detecting, storing, or the like. For example, the photovoltaic inverter or the external central control system may calculate the curve of the corresponding current thresholds when the switch bears the different voltage differences at the specific working temperature or in the specific working temperature range (for example, in the first working temperature range greater than or equal to the temperature threshold, or the second working temperature range less than the temperature threshold) in the working process (or the design process) of the voltage conversion circuit. Further, the control circuit may obtain the third current threshold based on the curve. The third current threshold may be specifically set based on the application scenario. It may be understood that the third current threshold herein may be one current, may be a plurality of discrete currents, or may be a current range including a plurality of discrete currents or continuous currents. For example, in the first working temperature range greater than or equal to the temperature threshold, the third current threshold may be less than or equal to the first current threshold. For another example, in the second working temperature range less than the temperature threshold, the third current threshold may be less than or equal to the second current threshold. When the third voltage threshold is less than the first current threshold (or the second current threshold), the photovoltaic inverter can avoid repeatedly reducing or increasing the input power of the target voltage conversion circuit through the control circuit when the input current of the target voltage conversion circuit is not stably less than the first current threshold (or the second current threshold). In other words, when the third voltage threshold is less than the first current threshold (or the second current threshold), after the input current of the target voltage conversion circuit is stable (for example, stably less than the third current threshold), the target voltage conversion circuit of the photovoltaic inverter may be in the working state in which the input power does not need to be reduced (or in other words, the switch in the target voltage conversion circuit works in a safe environment at a low risk of damage). In this case, the control circuit may regulate the duty cycle of the switch in the target voltage conversion circuit, so that the input power of the target voltage conversion circuit remains at the maximum target input power (for example, the photovoltaic panel connected to the target voltage conversion circuit works at the maximum power point). This improves the power supply efficiency.

With reference to the first aspect or any possible implementation of the first aspect, in a fifth possible implementation, the inverter circuit may include a switch. The control circuit may be further configured to: when the voltage of the bus (bus) is greater than or equal to a bus voltage threshold, regulate a duty cycle of the switch in the inverter circuit to regulate turn-on or turn-off of the switch in the inverter circuit, to reduce output power of the inverter circuit. It may be understood that the control circuit may determine the working state of the photovoltaic inverter in a plurality of manners, and further determine whether output power (or an output current) of the photovoltaic inverter (for example, the inverter circuit) needs to be controlled. For example, when the voltage of the bus (bus) is greater than or equal to the bus voltage threshold, it may be considered that the inverter circuit is in a working state in which the output power needs to be reduced (or in other words, each element in the photovoltaic inverter works in a harsh environment, and will be damaged at a high risk if continuing to work). In this case, the control circuit needs to reduce the output current and/or the output power of the inverter circuit. It may be understood that the bus voltage threshold herein may be one voltage, may be a plurality of discrete voltages, or may be a voltage range including a plurality of discrete voltages or consecutive voltages.

In this application, when the voltage of the bus (bus) is high (for example, the voltage of the bus (bus) is greater than or equal to the bus voltage threshold), it indicates that the photovoltaic inverter is in the working state in which the output power needs to be reduced. The control circuit may reduce the duty cycle of each switch in the inverter circuit, and further reduce the output power of the inverter circuit, to avoid the element in the photovoltaic inverter being damaged by overheat and further improve the power supply safety.

According to a second aspect, this application provides a power control method. The control method is applicable to a photovoltaic inverter. The photovoltaic inverter may include an inverter circuit, a plurality of voltage conversion circuits, an acquisition circuit, and a control circuit. One voltage conversion circuit may include at least one switch. Herein, one end of each voltage conversion circuit may be configured to be correspondingly connected to each of a plurality of groups of photovoltaic panels. The other end of each voltage conversion circuit may be configured to be connected in parallel to a bus (bus) and then connected to a load through the inverter circuit. The acquisition circuit is connected to each voltage conversion circuit, the bus (bus), and the control circuit. The control circuit is connected to the switch in each voltage conversion circuit. The method may include:
detecting an input voltage of a target voltage conversion circuit, an input current of the target voltage conversion circuit, and a voltage of the bus (bus), where the target voltage conversion circuit is any one or more of the plurality of voltage conversion circuits; regulating a current threshold of the target voltage conversion circuit based on the input voltage of the target voltage conversion circuit and the voltage of the bus (bus); and when the input current of the target voltage conversion circuit is greater than or equal to the current threshold of the target voltage conversion circuit, regulating a duty cycle of the switch in the target voltage conversion circuit to regulate turn-on or turn-off of the switch in the target voltage conversion circuit, to reduce a current or input power of the target voltage conversion circuit.

In this application, a photovoltaic panel may be connected to a load as a direct current power supply through a photovoltaic inverter. The photovoltaic inverter may convert direct current energy provided by the photovoltaic panel into alternating current energy, and provide the alternating current energy for the load. Herein, the photovoltaic inverter may include an inverter circuit and a plurality of voltage conversion circuits. The direct current power supply may include a plurality of groups of photovoltaic panels (each group of photovoltaic panels may include one photovoltaic panel or a plurality of photovoltaic panels). Each group of photovoltaic panels may be connected to the inverter circuit through one voltage conversion circuit. The voltage conversion circuit may convert a direct current voltage provided by the photovoltaic panel into a bus (bus) voltage, and then convert direct current energy into alternating current energy through the inverter circuit, so that an alternating current voltage output by the photovoltaic inverter may adapt to loads in a plurality of voltage ranges. In an application scenario including a plurality of groups of photovoltaic panels, there is a difference between the groups of photovoltaic panels (for example, lengths are different, shapes are different, or light intensities are different). Therefore, when a difference between an output voltage of a photovoltaic panel connected to a voltage conversion circuit (namely, an input voltage of the voltage conversion circuit) and a bus (bus) voltage is excessively large, an input current in the voltage conversion circuit is usually high. Consequently, a fault or damage may be brought to an element in the voltage conversion circuit (for example, a switch in the voltage conversion circuit) due to overvoltage (a voltage difference is excessively large), overcurrent (a current is excessively high), or overheat (a temperature is excessively high). Herein, the photovoltaic inverter may further include a control circuit and an acquisition circuit. The acquisition circuit may detect a power supply parameter of the photovoltaic inverter (for example, an input voltage and/or an output voltage of the voltage conversion circuit, an input current and/or an output current of the voltage conversion circuit, a temperature of the voltage conversion circuit, a voltage and/or a current of a bus (bus), an input voltage and/or an output voltage of the inverter circuit, an input current and/or an output current of the inverter circuit, and a temperature of the inverter circuit). Herein, the control circuit may determine a working state of the photovoltaic inverter based on the power supply parameter of the photovoltaic inverter. Herein, an example in which one (or more) voltage conversion circuit that needs to be controlled by the control circuit is a target voltage conversion circuit is used. The control circuit may regulate a current threshold of the target voltage conversion circuit based on an input voltage of the target voltage conversion circuit and the voltage of the bus (bus). After the current threshold of the target voltage conversion circuit is obtained, when an input current of the target voltage conversion circuit is greater than or equal to the current threshold of the target voltage conversion circuit, to protect working safety of the voltage conversion circuit, the control circuit may regulate a duty cycle of a switch in the target voltage conversion circuit (for example, reduce the duty cycle of the switch in the target voltage conversion circuit) to regulate turn-on or turn-off of the switch in the target voltage conversion circuit, to reduce a current or input power of the target voltage conversion circuit.

According to this application, when the input current of the target voltage conversion circuit is greater than or equal to the current threshold of the target voltage conversion circuit, the photovoltaic inverter may regulate the duty cycle of the switch through the control circuit to reduce the input power of the voltage conversion circuit, thereby improving stability and power supply efficiency of the photovoltaic inverter while ensuring power supply safety. A structure is simple, the method is simple, and applicability is high.

With reference to the second aspect, in a first possible implementation, the regulating a current threshold of the target voltage conversion circuit based on the input voltage of the target voltage conversion circuit and the voltage of the bus (bus) may include:
detecting a temperature of the target voltage conversion circuit; and when the temperature of the target voltage conversion circuit is greater than or equal to a temperature threshold, regulating the current threshold of the target voltage conversion circuit to a first current threshold based on the input voltage of the target voltage conversion circuit and the voltage of the bus (bus).

It may be understood that the control circuit may determine a working state of the target voltage conversion circuit in a plurality of manners, and further determine whether the input power (or the input current) of the target voltage conversion circuit needs to be controlled. In other words, the control circuit may determine the working state of the target voltage conversion circuit in the plurality of manners, and further determine whether the duty cycle of the switch in the target voltage conversion circuit needs to be regulated. For example, when the input current of the target voltage conversion circuit is greater than or equal to the current threshold of the target voltage conversion circuit, it may be considered that the target voltage conversion circuit is in a working state in which the input power needs to be reduced (or in other words, the switch in the target voltage conversion circuit works in a harsh environment, and will be damaged at a high risk if continuing to work). In this case, the control circuit needs to reduce the input current and/or the input power of the target voltage conversion circuit. Herein, when a working temperature of the switch in the target voltage conversion circuit is different, an input current bearable by the switch may be different even if a voltage difference borne by the switch is the same. For example, when the working temperature of the switch in the target voltage conversion circuit is high (for example, the temperature of the target voltage conversion circuit is greater than or equal to the temperature threshold), the control circuit may determine, based on the voltage difference (for example, a difference between the input voltage of the target voltage conversion circuit and the voltage of the bus (bus)) borne by the switch in the target voltage conversion circuit, a maximum input current (for example, the first current threshold) bearable by the switch in the target voltage conversion circuit. It should be noted that a value of the first current threshold may be determined based on the maximum input current of the switch in the target voltage conversion circuit (for example, determined based on corresponding nominal currents when switches of various models bear different voltage differences), or may be determined based on the current threshold obtained by the photovoltaic inverter in a manner of obtaining, acquiring, receiving, detecting, storing, or the like. For example, the photovoltaic inverter or an external central control system may calculate a curve of corresponding current thresholds when the switch bears different voltage differences at a specific working temperature or in a specific working temperature range (for example, in a first working temperature range greater than or equal to the temperature threshold) in a working process (or a design process) of the voltage conversion circuit. Further, the control circuit may obtain the first current threshold based on the curve. The first current threshold may be specifically set based on an application scenario. It may be understood that the first current threshold herein may be one current, may be a plurality of discrete currents, or may be a current range including a plurality of discrete currents or continuous currents.

In this application, when the working temperature of the switch in the target voltage conversion circuit is high (for example, the temperature of the target voltage conversion circuit is greater than or equal to the temperature threshold), if an input current of the switch in the target voltage conversion circuit is greater than or equal to the first current threshold, it indicates that the target voltage conversion circuit is in a working state in which the target voltage conversion circuit needs to be regulated, and the control circuit may reduce the duty cycle of the switch in the target voltage conversion circuit to further reduce the input power of the target voltage conversion circuit, to avoid an element in the target voltage conversion circuit being damaged by overheat and improve safety of the target voltage conversion circuit. In addition, the control circuit does not completely cut off input electric energy of the target voltage conversion circuit. This ensures electric energy transmission efficiency on the basis of ensuring safety.

With reference to the first possible implementation of the second aspect, in a second possible implementation, after the detecting a temperature of the target voltage conversion circuit, the method further includes:
when the temperature of the target voltage conversion circuit is less than the temperature threshold, regulating the current threshold of the target voltage conversion circuit to a second current threshold based on the input voltage of the target voltage conversion circuit and the voltage of the bus (bus), where the second current threshold is greater than or equal to the first current threshold.

It may be understood that the control circuit may determine the working state of the target voltage conversion circuit in the plurality of manners, and further determine whether the input power (or the input current) of the target voltage conversion circuit needs to be controlled. In other words, the control circuit may determine the working state of the target voltage conversion circuit in the plurality of manners, and further determine whether the duty cycle of the switch in the target voltage conversion circuit needs to be regulated. For example, when the input current of the target voltage conversion circuit is greater than or equal to the current threshold of the target voltage conversion circuit, it may be considered that the target voltage conversion circuit is in the working state in which the input power needs to be reduced (or in other words, the switch in the target voltage conversion circuit works in a harsh environment, and will be damaged at a high risk if continuing to work). In this case, the control circuit needs to reduce the input current and/or the input power of the target voltage conversion circuit. Herein, when the working temperature of the switch in the target voltage conversion circuit is different, the input current bearable by the switch may be different even if the voltage difference borne by the switch is the same. For example, when the working temperature of the switch in the target voltage conversion circuit is low (for example, the temperature of the target voltage conversion circuit is less than the temperature threshold), the control circuit may determine, based on the voltage difference (for example, the difference between the input voltage of the target voltage conversion circuit and the voltage of the bus (bus)) borne by the switch in the target voltage conversion circuit, the maximum input current (for example, the second current threshold) bearable by the switch in the target voltage conversion circuit. Herein, the second current threshold is less than or equal to the first voltage threshold. It should be noted that a value of the second current threshold may be determined based on the maximum input current of the switch in the target voltage conversion circuit (for example, determined based on the corresponding nominal currents when the switches of the various models bear the different voltage differences), or may be determined based on the current threshold obtained by the photovoltaic inverter in the manner of obtaining, acquiring, receiving, detecting, storing, or the like. For example, the photovoltaic inverter or the external central control system may calculate the curve of the corresponding current thresholds when the switch bears the different voltage differences at the specific working temperature or in the specific working temperature range (for example, in a second working temperature range less than the temperature threshold) in the working process (or the design process) of the voltage conversion circuit. Further, the control circuit may obtain the second current threshold based on the curve. The second current threshold may be specifically set based on the application scenario. It may be understood that the second current threshold herein may be one current, may be a plurality of discrete currents, or may be a current range including a plurality of discrete currents or continuous currents.

In this application, when the working temperature of the switch in the target voltage conversion circuit is low (for example, the temperature of the target voltage conversion circuit is less than the temperature threshold), if the input current of the switch in the target voltage conversion circuit is greater than or equal to the second current threshold, it indicates that the target voltage conversion circuit is in the working state in which the target voltage conversion circuit needs to be regulated, and the control circuit may reduce the duty cycle of the switch in the target voltage conversion circuit to further reduce the input power of the target voltage conversion circuit, to avoid the element in the target voltage conversion circuit being damaged by overheat and improve safety of the target voltage conversion circuit. In addition, the control circuit does not completely cut off input electric energy of the target voltage conversion circuit. This ensures electric energy transmission efficiency on the basis of ensuring safety.

With reference to the second possible implementation of the second aspect, in a third possible implementation, after the regulating a current threshold of the target voltage conversion circuit based on the input voltage of the target voltage conversion circuit and the voltage of the bus (bus), the method may further include:
when the input current of the target voltage conversion circuit is greater than or equal to the current threshold of the target voltage conversion circuit, generating a switching-modulation signal based on the input current of the target voltage conversion circuit and the current threshold of the target voltage conversion circuit, and controlling the duty cycle of the switch in the target voltage conversion circuit based on the switching-modulation signal to regulate turn-on or turn-off of the switch in the target voltage conversion circuit.

Herein, the control circuit (for example, a current regulation loop (for example, a proportional regulation circuit or a proportional integral regulation circuit) and a driving-control circuit, or another circuit with a current regulation function and a driving-control function) may generate the switching-modulation signal based on the input current of the target voltage conversion circuit and the current threshold of the target voltage conversion circuit to control the duty cycle of the switch in the target voltage conversion circuit. For example, the control circuit may generate a signal such as a pulse width modulation (Pulse Width Modulation, PWM) wave as the switching-modulation signal, or generate a driving pulse signal as the switching-modulation signal based on the PWM wave. Herein, the switching-modulation signal may control the duty cycle of the switch in the target voltage conversion circuit, and further control the input current and/or the input power of the target voltage conversion circuit. For example, the control circuit may reduce the duty cycle of the switch in the target voltage conversion circuit to reduce the input current of the target voltage conversion circuit, to reduce the input power of the target voltage conversion circuit. It may be understood that the control circuit provided in this application may use a discontinuous pulse width modulation (Discontinuous Pulse Width Modulation, DPWM) wave as the switching-modulation signal, or may use another PWM wave (for example, a sinusoidal pulse width modulation (Sinusoidal Pulse Width Modulation, SPWM) wave, a third harmonic injection pulse width modulation (Third Harmonic Injection Pulse Width Modulation, THIPWM) wave, or a carrier-based space vector pulse width modulation (Carrier Based Space Vector Pulse Width Modulation, CBPWM) wave) as the switching-modulation signal, or may use a driving pulse signal generated based on these PWM waves as the switching-modulation signal. An application range is wide, and a control effect is good.

With reference to the second aspect or any possible implementation of the second aspect, in a fourth possible implementation, after the regulating a current threshold of the target voltage conversion circuit based on the input voltage of the target voltage conversion circuit and the voltage of the bus (bus), the method may further include:
when the input current of the target voltage conversion circuit is less than the current threshold of the target voltage conversion circuit, regulating the duty cycle of the switch in the target voltage conversion circuit to regulate turn-on or turn-off of the switch in the target voltage conversion circuit, so that the input power of the target voltage conversion circuit remains at maximum target input power.

Herein, when the input current of the target voltage conversion circuit is less than the current threshold (for example, a third current threshold) of the target voltage conversion circuit, it may be considered that the target voltage conversion circuit is in a working state in which the input power does not need to be reduced (or in other words, the switch in the target voltage conversion circuit works in a safe environment at a low risk of damage). In this case, the control circuit may regulate the duty cycle of the switch in the target voltage conversion circuit, so that the input power of the target voltage conversion circuit remains at the maximum target input power (for example, the photovoltaic panel connected to the target voltage conversion circuit works at a maximum power point). Herein, a value of the third current threshold may be determined based on the maximum input current of the switch in the target voltage conversion circuit (for example, determined based on the corresponding nominal currents when the switches of various models bear the different voltage differences), or may be determined based on the current threshold obtained by the photovoltaic inverter in the manner of obtaining, acquiring, receiving, detecting, storing, or the like. For example, the photovoltaic inverter or the external central control system may calculate the curve of the corresponding current thresholds when the switch bears the different voltage differences at the specific working temperature or in the specific working temperature range (for example, in the first working temperature range greater than or equal to the temperature threshold, or the second working temperature range less than the temperature threshold) in the working process (or the design process) of the voltage conversion circuit. Further, the control circuit may obtain the third current threshold based on the curve. The third current threshold may be specifically set based on the application scenario. It may be understood that the third current threshold herein may be one current, may be a plurality of discrete currents, or may be a current range including a plurality of discrete currents or continuous currents. For example, in the first working temperature range greater than or equal to the temperature threshold, the third current threshold may be less than or equal to the first current threshold. For another example, in the second working temperature range less than the temperature threshold, the third current threshold may be less than or equal to the second current threshold. When the third voltage threshold is less than the first current threshold (or the second current threshold), the photovoltaic inverter can avoid repeatedly reducing or increasing the input power of the target voltage conversion circuit through the control circuit when the input current of the target voltage conversion circuit is not stably less than the first current threshold (or the second current threshold). In other words, when the third voltage threshold is less than the first current threshold (or the second current threshold), after the input current of the target voltage conversion circuit is stable (for example, stably less than the third current threshold), the target voltage conversion circuit of the photovoltaic inverter may be in the working state in which the input power does not need to be reduced (or in other words, the switch in the target voltage conversion circuit works in a safe environment at a low risk of damage). In this case, the control circuit may regulate the duty cycle of the switch in the target voltage conversion circuit, so that the input power of the target voltage conversion circuit remains at the maximum target input power (for example, the photovoltaic panel connected to the target voltage conversion circuit works at the maximum power point). This improves the power supply efficiency.

With reference to the second aspect or any possible implementation of the second aspect, in a fifth possible implementation, the inverter circuit may include a switch. After the detecting an input voltage of a target voltage conversion circuit, an input current of the target voltage conversion circuit, and a voltage of the bus (bus), the method may further include:
when the voltage of the bus (bus) is greater than or equal to a bus voltage threshold, regulating a duty cycle of the switch in the inverter circuit to regulate turn-on or turn-off of the switch in the inverter circuit, to reduce output power of the inverter circuit.

It may be understood that the control circuit may determine the working state of the photovoltaic inverter in a plurality of manners, and further determine whether output power (or an output current) of the photovoltaic inverter (for example, the inverter circuit) needs to be controlled. For example, when the voltage of the bus (bus) is greater than or equal to the bus voltage threshold, it may be considered that the inverter circuit is in a working state in which the output power needs to be reduced (or in other words, each element in the photovoltaic inverter works in a harsh environment, and will be damaged at a high risk if continuing to work). In this case, the control circuit needs to reduce the output current and/or the output power of the inverter circuit. It may be understood that the bus voltage threshold herein may be one voltage, may be a plurality of discrete voltages, or may be a voltage range including a plurality of discrete voltages or consecutive voltages.

In this application, when the voltage of the bus (bus) is high (for example, the voltage of the bus (bus) is greater than or equal to the bus voltage threshold), it indicates that the photovoltaic inverter is in the working state in which the output power needs to be reduced. The control circuit may reduce the duty cycle of each switch in the inverter circuit, and further reduce the output power of the inverter circuit, to avoid the element in the photovoltaic inverter being damaged by overheat and further improve the power supply safety.

### BRIEF DESCRIPTION OF DRAWINGS

FIG. 1 is a schematic diagram of an application scenario of a photovoltaic inverter according to an embodiment of this application;
FIG. 2 is a schematic diagram of a layout scenario of photovoltaic panels according to an embodiment of this application;
FIG. 3 is a schematic diagram of a structure of a photovoltaic inverter according to an embodiment of this application;
FIG. 4 is a schematic diagram of a volt-ampere characteristic of a photovoltaic panel according to an embodiment of this application;
FIG. 5 is a schematic diagram of a current threshold curve of a voltage conversion circuit according to an embodiment of this application;
FIG. 6 is a schematic diagram of another structure of a photovoltaic inverter according to an embodiment of this application;
FIG. 7 is a schematic diagram of a structure of a photovoltaic system according to an embodiment of this application;
FIG. 8 is a schematic flowchart of a power control method according to an embodiment of this application; and
FIG. 9 is another schematic flowchart of a power control method according to an embodiment of this application.

### DESCRIPTION OF EMBODIMENTS

In the technical field of power electronics, an inverter circuit in a photovoltaic inverter is usually used to convert direct current energy into alternating current energy, so that electric energy can be transmitted between a power supply and a load. For example, in the field of photovoltaic power supply, a photovoltaic inverter may convert direct current energy output by a direct current power supply (for example, a photovoltaic panel) into alternating current energy, and provide the alternating current energy for a load or a power grid to use. Generally, a control circuit (for example, an MPPT control circuit) in the photovoltaic inverter controls an output current of the photovoltaic panel (namely, an input current of the photovoltaic inverter) based on an output voltage of the photovoltaic panel (namely, an input voltage of the photovoltaic inverter), so that the photovoltaic panel outputs electric energy to the load at maximum power. In actual application, a photovoltaic inverter usually converts, by using a plurality of voltage conversion circuits, a direct current voltage provided by each group of photovoltaic panels into a direct current bus voltage (for example, boosts and converts the voltage of each group of photovoltaic panels into the bus (bus) voltage), and then converts direct current energy into alternating current energy by using an inverter circuit, to adapt to voltages of different loads. There is a difference between the groups of photovoltaic panels (for example, lengths are different, or light intensities are different). Therefore, when a difference between an output voltage of a photovoltaic panel connected to a voltage conversion circuit (namely, an input voltage of the voltage conversion circuit) and the bus (bus) voltage is excessively large, an input current in the voltage conversion circuit is usually high. Consequently, a fault or damage is brought to an element in the voltage conversion circuit (for example, a switch in the voltage conversion circuit) due to overvoltage, overcurrent, or overheat. Therefore, when the voltage conversion circuit works, input power (or a parameter such as an input current) of the voltage conversion circuit needs to be controlled to ensure power supply safety of each element in the photovoltaic inverter.

This application provides a photovoltaic inverter and a power control method. When an input current of a target voltage conversion circuit is greater than or equal to a current threshold of the target voltage conversion circuit, a duty cycle of a switch may be regulated through a control circuit to reduce input power of the voltage conversion circuit, thereby improving stability and power supply efficiency of the photovoltaic inverter while ensuring power supply safety. A structure is simple, the method is simple, and applicability is high.

The photovoltaic inverter provided in this application is applicable to a plurality of application fields such as the field of new energy power generation, the field of conventional peak-load regulation and frequency regulation for power generation, the field of power supply to important equipment, and the field of new energy vehicles. This may be specifically determined based on an actual application scenario, and is not limited herein. The photovoltaic inverter provided in this application is applicable to different power supply systems such as an energy storage system, an uninterruptible power supply system, and a motor drive system. This may be specifically determined based on an actual application scenario, and is not limited herein. The photovoltaic inverter provided in this application may be adapted to different application scenarios, for example, an application scenario of controlling an inverter in a light energy power supply environment, an application scenario of controlling an inverter in a new energy power supply environment, or another application scenario. The following uses an application scenario of controlling a photovoltaic inverter in a light energy power supply environment as an example for description, and details are not described below again.

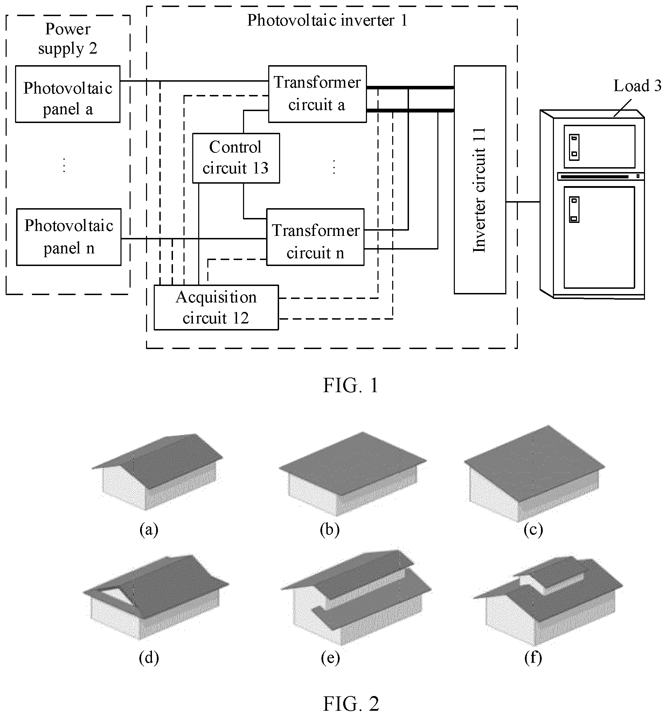

Refer to FIG. 1. FIG. 1 is a schematic diagram of an application scenario of a photovoltaic inverter according to an embodiment of this application. In a photovoltaic system based on light energy power supply, as shown in FIG. 1, the photovoltaic system includes a photovoltaic inverter 1, a power supply 2 including a plurality of groups of photovoltaic panels (for example, a photovoltaic panel a to a photovoltaic panel n), and a load 3. The power supply 2 may be connected to the load 3 through the photovoltaic inverter 1. In some feasible implementations, the photovoltaic inverter 1 may convert direct current energy provided by the power supply 2 including the plurality of groups of photovoltaic panels into alternating current energy, and provide the alternating current energy for the load. It may be understood that the power supply 2 provided in this application is applicable to an application scenario in which power is supplied to various types of utilization equipment, for example, power is supplied to base station equipment in a remote area with no mains supply or poor mains supply, or power is supplied to household equipment (such as a refrigerator or an air conditioner). This may be specifically determined based on an actual application scenario, and is not limited herein. It may be further understood that the load 3 in FIG. 2 may include a power grid. The power grid herein may include utilization equipment or power transmission equipment such as a transmission line, a power transfer station, a communication base station, or household equipment. Herein, the photovoltaic inverter 1 includes an inverter circuit 11 and a plurality of voltage conversion circuits (for example, a voltage conversion circuit a to a voltage conversion circuit n). Each group of photovoltaic panels may be connected to the inverter circuit 11 through one corresponding voltage conversion circuit. The voltage conversion circuit may convert a direct current voltage provided by the photovoltaic panel into a bus (bus) voltage, and then convert direct current energy into alternating current energy through the inverter circuit 11, so that an alternating current voltage output by the photovoltaic inverter may adapt to loads in a plurality of voltage ranges.

In some feasible implementations, for details, refer to FIG. 2 together. FIG. 2 is a schematic diagram of a layout scenario of photovoltaic panels according to an embodiment of this application. As shown in FIG. 2, a gray part is a position at which the photovoltaic panel is arranged (for example, a top of a house or a building). In an application scenario including a plurality of groups of photovoltaic panels, there is a difference between the groups of photovoltaic panels (for example, as shown by a part (a), a part (b), and a part (c) in FIG. 2, light intensities of the photovoltaic panels arranged at the top are different; and as shown by a part (d), a part (e), and a part (f) in FIG. 2, lengths and shapes of the photovoltaic panels arranged at the top are different). Therefore, when a difference between an output voltage of a photovoltaic panel connected to a voltage conversion circuit (namely, an input voltage of the voltage conversion circuit) and a bus (bus) voltage is excessively large, an input current in the voltage conversion circuit is usually high. Consequently, a fault or damage may be brought to an element in the voltage conversion circuit (for example, a switch in the voltage conversion circuit) due to overvoltage (a voltage difference is excessively large), overcurrent (a current is excessively high), or overheat (a temperature is excessively high). Therefore, when the photovoltaic inverter 1 works, input power in the voltage conversion circuit needs to be controlled to ensure power supply safety of each element in the photovoltaic inverter. Herein, the photovoltaic inverter 1 may further include a control circuit 13 and an acquisition circuit 12. The acquisition circuit 12 may detect a power supply parameter of the photovoltaic inverter (for example, an input voltage and/or an output voltage of the voltage conversion circuit, an input current and/or an output current of the voltage conversion circuit, a temperature of the voltage conversion circuit, a voltage and/or a current of a bus (bus), an input voltage and/or an output voltage of the inverter circuit 11, an input current and/or an output current of the inverter circuit 11, and a temperature of the inverter circuit 11). Herein, the control circuit 13 may determine a working state of the photovoltaic inverter based on the power supply parameter of the photovoltaic inverter. Herein, an example in which one (or more) voltage conversion circuit that needs to be controlled by the control circuit 13 is a target voltage conversion circuit is used. The control circuit 13 may regulate a current threshold of the target voltage conversion circuit based on an input voltage of the target voltage conversion circuit and the voltage of the bus (bus). After the current threshold of the target voltage conversion circuit is obtained, when an input current of the target voltage conversion circuit is greater than or equal to the current threshold of the target voltage conversion circuit, to protect working safety of the voltage conversion circuit, the control circuit 13 may regulate a duty cycle of a switch in the target voltage conversion circuit (for example, reduce the duty cycle of the switch in the target voltage conversion circuit) to regulate turn-on or turn-off of the switch in the target voltage conversion circuit, to reduce input power of the target voltage conversion circuit. This improves stability and power supply efficiency of the photovoltaic inverter while ensuring power supply safety. A structure is simple, a method is simple, and applicability is high.

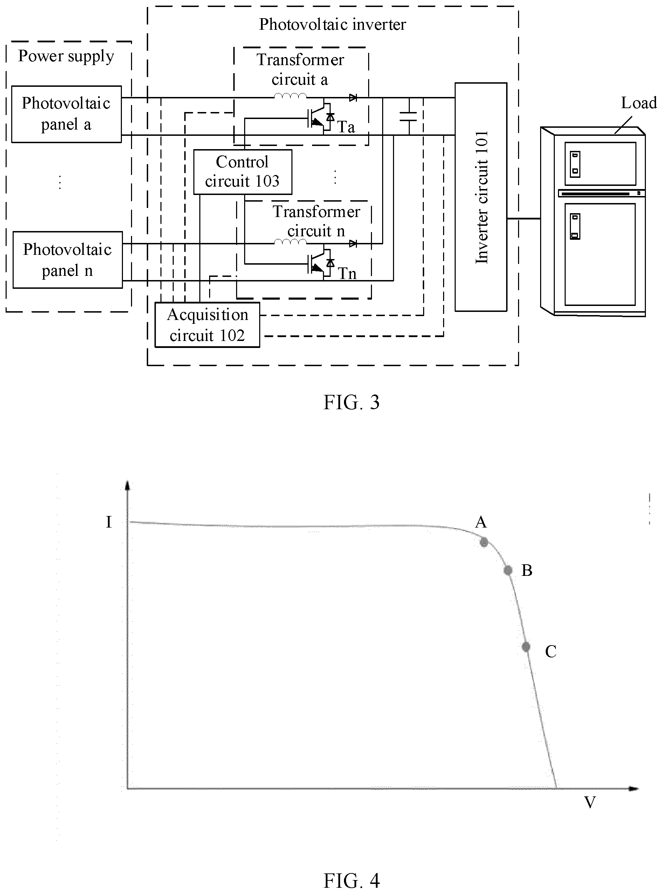

The following describes, by using examples with reference to FIG. 3 to FIG. 9, the photovoltaic inverter provided in this application and a working principle of the photovoltaic inverter.

Refer to FIG. 3. FIG. 3 is a schematic diagram of a structure of a photovoltaic inverter according to an embodiment of this application. As shown in FIG. 3, a photovoltaic system includes a power supply, a photovoltaic inverter, and a load. The photovoltaic inverter includes an inverter circuit 101, a plurality of voltage conversion circuits, a plurality of acquisition circuits, and a control circuit 103. One voltage conversion circuit may include at least one switch. Herein, to make legend connections simpler and clearer, in the accompanying drawings of this application, the plurality of acquisition circuits are integrated into an acquisition circuit module to show a connection relationship and a detection relationship of the plurality of acquisition circuits and describe a working principle of the plurality of acquisition circuits. As shown in FIG. 3, as an example, the plurality of acquisition circuits are shown as the acquisition circuit 102. In a specific implementation, the acquisition circuit in each figure may be divided into a plurality of acquisition circuits for arrangement. Details are not described below. Herein, one end of each voltage conversion circuit may be configured to be correspondingly connected to each of a plurality of groups of photovoltaic panels. The other end of each voltage conversion circuit may be configured to be connected in parallel to a bus (bus) and then connected to the load through the inverter circuit 101. The acquisition circuit 102 may be connected to the control circuit 103 and configured to detect voltages or currents of the plurality of voltage conversion circuits and the bus (bus). The control circuit 103 is connected to the switch in each voltage conversion circuit. Herein, the acquisition circuit 102 may be configured to detect an input voltage of a target voltage conversion circuit and the voltage of the bus (bus). The target voltage conversion circuit is any one or more of the plurality of voltage conversion circuits. Herein, the control circuit 103 may regulate a current threshold of the target voltage conversion circuit based on the input voltage of the target voltage conversion circuit and the voltage of the bus (bus). Herein, the control circuit 103 may be configured to: when an input current of the target voltage conversion circuit is greater than or equal to the current threshold of the target voltage conversion circuit, regulate a duty cycle of the switch in the target voltage conversion circuit to regulate turn-on or turn-off of the switch in the target voltage conversion circuit, to reduce a current or input power of the target voltage conversion circuit.

In this application, the voltage conversion circuit may be various circuits with a voltage transformation function. In FIG. 3, only an example in which the voltage conversion circuit is a boost (boost) circuit is used for description. Herein, the boost (boost) circuit may include the switch, an inductor, and a diode. One end of the inductor is connected to the power supply (namely, the photovoltaic panel). The other end of the inductor is connected to the bus (bus) through the switch and the diode. In some application scenarios, the boost (boost) circuit may reuse a bus capacitor connected in parallel to the bus (bus), to stabilize an output voltage of the boost (boost) circuit through the bus capacitor. When the switch of the boost (boost) circuit is turned on, the power supply charges the inductor, the boost (boost) circuit supplies power to the inverter circuit 101 (and the load) through the bus capacitor, and the diode prevents electric energy confluence at the bus capacitor. When the switch of the boost (boost) circuit is turned off, the power supply and the inductor charge the bus capacitor, and the boost (boost) circuit increases an input voltage to a voltage of the bus capacitor for output. It may be understood that, when a voltage of the switch of the boost (boost) circuit is ignored, the input voltage Vin of the boost (boost) circuit, the output voltage Vout of the boost (boost) circuit, and a duty cycle N of the switch of the boost (boost) circuit meet: Vun/Vout=1/(1-N). Herein, the acquisition circuit 102 may detect a power supply parameter of the photovoltaic inverter (for example, an input voltage and/or an output voltage of the voltage conversion circuit, an input current and/or an output current of the voltage conversion circuit, a temperature of the voltage conversion circuit, a voltage and/or a current of a bus (bus), an input voltage and/or an output voltage of the inverter circuit 101, an input current and/or an output current of the inverter circuit 101, and a temperature of the inverter circuit 101). In addition, it may be understood that the control circuit 103 may determine a working state of the photovoltaic inverter based on the power supply parameter of the photovoltaic inverter. Herein, an example in which one (or more) voltage conversion circuit that needs to be controlled by the control circuit 103 is the target voltage conversion circuit is used. The control circuit 103 may regulate the current threshold of the target voltage conversion circuit based on the input voltage of the target voltage conversion circuit and the voltage of the bus (bus). For details, refer to FIG. 4 together. FIG. 4 is a schematic diagram of a volt-ampere characteristic of a photovoltaic panel according to an embodiment of this application. As shown in FIG. 4, after the current threshold of the target voltage conversion circuit is obtained, it is assumed that an output parameter (for example, an output current and an output voltage) of the group of photovoltaic panels connected to the target voltage conversion circuit corresponds to a point B in a volt-ampere characteristic curve of the group of photovoltaic panels in FIG. 4. When the output current Ib of the photovoltaic panel corresponding to the point B (namely, the input current of the target voltage conversion circuit) is less than the current threshold of the target voltage conversion circuit, to ensure power supply efficiency of the system, the control circuit 103 (for example, an MPPT control circuit) in the photovoltaic inverter may regulate the duty cycle of the switch in the target voltage conversion circuit based on the output voltage of the photovoltaic panel (namely, an input voltage of the photovoltaic inverter) to regulate turn-on or turn-off of the switch in the target voltage conversion circuit to increase the output current of the photovoltaic panel to Ia corresponding to a point A (namely, increase the input current of the photovoltaic inverter to Ia), so that the photovoltaic panel outputs electric energy at maximum power (that is, power shown at the point A). Still as shown in FIG. 4, when the output current Ib of the photovoltaic panel corresponding to the point B (namely, the input current of the target voltage conversion circuit) is greater than or equal to the current threshold of the target voltage conversion circuit, to ensure working safety of the voltage conversion circuit, the control circuit 103 may regulate the duty cycle of the switch in the target voltage conversion circuit (for example, reduce the duty cycle of the switch in the target voltage conversion circuit) to regulate turn-on or turn-off of the switch in the target voltage conversion circuit to reduce the output current of the photovoltaic panel to Ic corresponding to a point C (namely, reduce the input current of the photovoltaic inverter to Ic), to reduce the input power of the target voltage conversion circuit (namely, reduce the input power of the target voltage conversion circuit to power shown at the point C).

According to this application, when the input current of the target voltage conversion circuit is greater than or equal to the current threshold of the target voltage conversion circuit, the photovoltaic inverter may regulate the duty cycle of the switch through the control circuit 103 to reduce the input power of the voltage conversion circuit, thereby improving stability and power supply efficiency of the photovoltaic inverter while ensuring power supply safety. A structure is simple, a method is simple, and applicability is high.

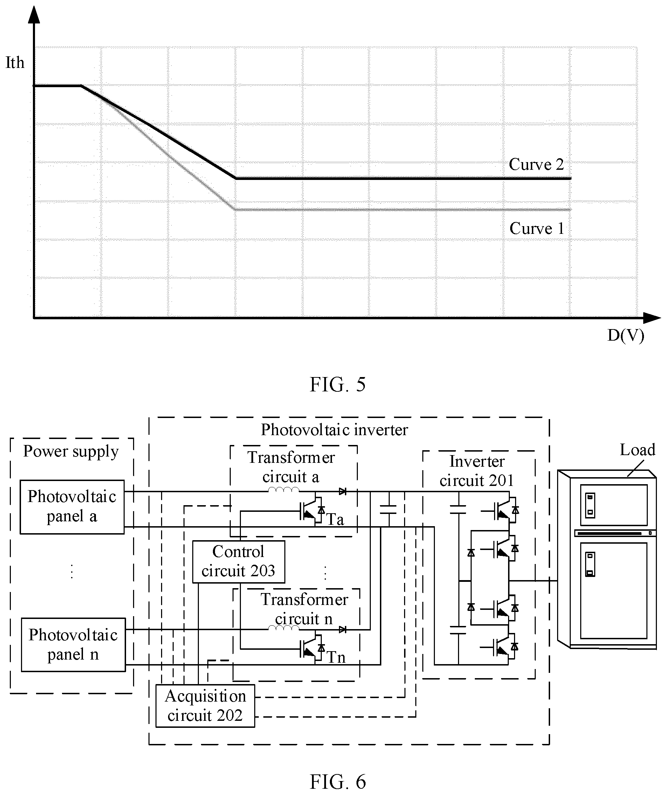

In some feasible implementations, the acquisition circuit 102 may be further configured to detect a temperature of the target voltage conversion circuit. The control circuit 103 may be further configured to: when the temperature of the target voltage conversion circuit is greater than or equal to a temperature threshold, regulate the current threshold of the target voltage conversion circuit to a first current threshold based on the input voltage of the target voltage conversion circuit and the voltage of the bus (bus). It may be understood that the control circuit 103 may determine a working state of the target voltage conversion circuit in a plurality of manners, and further determine whether the input power (or the input current) of the target voltage conversion circuit needs to be controlled. In other words, the control circuit 103 may determine the working state of the target voltage conversion circuit in the plurality of manners, and further determine whether the duty cycle of the switch in the target voltage conversion circuit needs to be regulated. For example, when the input current of the target voltage conversion circuit is greater than or equal to the current threshold of the target voltage conversion circuit, it may be considered that the target voltage conversion circuit is in a working state in which the input power needs to be reduced (or in other words, the switch in the target voltage conversion circuit works in a harsh environment, and will be damaged at a high risk if continuing to work). In this case, the control circuit 103 needs to reduce the input current and/or the input power of the target voltage conversion circuit. Herein, when a working temperature of the switch in the target voltage conversion circuit is different, an input current bearable by the switch may be different even if a voltage difference borne by the switch is the same. For details, refer to FIG. 5 together. FIG. 5 is a schematic diagram of a current threshold curve of a voltage conversion circuit according to an embodiment of this application. As shown in FIG. 5, the photovoltaic inverter or an external central control system may calculate a curve of corresponding current thresholds Ith when the switch bears different voltage differences D(V) to be a curve 1 at a specific working temperature or in a specific working temperature range (for example, in a first working temperature range greater than or equal to the temperature threshold) in a working process (or a design process) of the voltage conversion circuit. Further, the control circuit 103 may obtain the first current threshold based on the curve. For example, when the working temperature of the switch in the target voltage conversion circuit is high (for example, the temperature of the target voltage conversion circuit is greater than or equal to the temperature threshold), the control circuit 103 may determine, based on the voltage difference (for example, a difference between the input voltage of the target voltage conversion circuit and the voltage of the bus (bus)) borne by the switch in the target voltage conversion circuit, a maximum input current (for example, the first current threshold) bearable by the switch in the target voltage conversion circuit. It should be noted that a value of the first current threshold may be determined based on the maximum input current of the switch in the target voltage conversion circuit (for example, determined based on corresponding nominal currents when switches of various models bear different voltage differences), or may be determined based on the current threshold obtained by the photovoltaic inverter in a manner of obtaining, acquiring, receiving, detecting, storing, or the like. The first current threshold may be specifically set based on an application scenario. It may be understood that the first current threshold herein may be one current, may be a plurality of discrete currents, or may be a current range including a plurality of discrete currents or continuous currents.

In this application, when the working temperature of the switch in the target voltage conversion circuit is high (for example, the temperature of the target voltage conversion circuit is greater than or equal to the temperature threshold), if an input current of the switch in the target voltage conversion circuit is greater than or equal to the first current threshold, it indicates that the target voltage conversion circuit is in a working state in which the target voltage conversion circuit needs to be regulated, and the control circuit 103 may reduce the duty cycle of the switch in the target voltage conversion circuit to further reduce the input power of the target voltage conversion circuit, to avoid an element in the target voltage conversion circuit being damaged by overheat and improve safety of the target voltage conversion circuit. In addition, the control circuit 103 does not completely cut off input electric energy of the target voltage conversion circuit. This ensures electric energy transmission efficiency on the basis of ensuring safety.

In some feasible implementations, the control circuit 103 may be further configured to: when the temperature of the target voltage conversion circuit is less than the temperature threshold, regulate the current threshold of the target voltage conversion circuit to a second current threshold based on the input voltage of the target voltage conversion circuit and the voltage of the bus (bus). The second current threshold is greater than or equal to the first current threshold. It may be understood that the control circuit 103 may determine the working state of the target voltage conversion circuit in the plurality of manners, and further determine whether the input power (or the input current) of the target voltage conversion circuit needs to be controlled. In other words, the control circuit 103 may determine the working state of the target voltage conversion circuit in the plurality of manners, and further determine whether the duty cycle of the switch in the target voltage conversion circuit needs to be regulated. For example, when the input current of the target voltage conversion circuit is greater than or equal to the current threshold of the target voltage conversion circuit, it may be considered that the target voltage conversion circuit is in the working state in which the input power needs to be reduced (or in other words, the switch in the target voltage conversion circuit works in a harsh environment, and will be damaged at a high risk if continuing to work). In this case, the control circuit 103 needs to reduce the input current and/or the input power of the target voltage conversion circuit. Herein, when the working temperature of the switch in the target voltage conversion circuit is different, the input current bearable by the switch may be different even if the voltage difference borne by the switch is the same. Still as shown in FIG. 5, the photovoltaic inverter or the external central control system may calculate the curve of the corresponding current thresholds Ith when the switch bears the different voltage differences D(V) to be a curve 2 at the specific working temperature or in the specific working temperature range (for example, in a second working temperature range less than the temperature threshold) in the working process (or the design process) of the voltage conversion circuit. Further, the control circuit 103 may obtain the second current threshold based on the curve. For example, when the working temperature of the switch in the target voltage conversion circuit is low (for example, the temperature of the target voltage conversion circuit is less than the temperature threshold), the control circuit 103 may determine, based on the voltage difference (for example, the difference between the input voltage of the target voltage conversion circuit and the voltage of the bus (bus)) borne by the switch in the target voltage conversion circuit, the maximum input current (for example, the second current threshold) bearable by the switch in the target voltage conversion circuit. Herein, the second current threshold is less than or equal to the first voltage threshold. It should be noted that a value of the second current threshold may be determined based on the maximum input current of the switch in the target voltage conversion circuit (for example, determined based on the corresponding nominal currents when the switches of the various models bear the different voltage differences), or may be determined based on the current threshold obtained by the photovoltaic inverter in the manner of obtaining, acquiring, receiving, detecting, storing, or the like. The second current threshold may be specifically set based on the application scenario. It may be understood that the second current threshold herein may be one current, may be a plurality of discrete currents, or may be a current range including a plurality of discrete currents or continuous currents.

In this application, when the working temperature of the switch in the target voltage conversion circuit is low (for example, the temperature of the target voltage conversion circuit is less than the temperature threshold), if the input current of the switch in the target voltage conversion circuit is greater than or equal to the second current threshold, it indicates that the target voltage conversion circuit is in the working state in which the target voltage conversion circuit needs to be regulated, and the control circuit 103 may reduce the duty cycle of the switch in the target voltage conversion circuit to further reduce the input power of the target voltage conversion circuit, to avoid the element in the target voltage conversion circuit being damaged by overheat and improve safety of the target voltage conversion circuit. In addition, the control circuit 103 does not completely cut off input electric energy of the target voltage conversion circuit. This ensures electric energy transmission efficiency on the basis of ensuring safety.

In some feasible implementations, the control circuit 103 may be further configured to: when the input current of the target voltage conversion circuit is greater than or equal to the current threshold of the target voltage conversion circuit, generate a switching-modulation signal based on the input current of the target voltage conversion circuit and the current threshold of the target voltage conversion circuit, and control the duty cycle of the switch in the target voltage conversion circuit based on the switching-modulation signal to regulate turn-on or turn-off of the switch in the target voltage conversion circuit. Herein, the control circuit 103 (for example, a current regulation loop (for example, a proportional regulation circuit or a proportional integral regulation circuit) and a driving-control circuit 103, or another circuit with a current regulation function and a driving-control function) may generate the switching-modulation signal based on the input current of the target voltage conversion circuit and the current threshold of the target voltage conversion circuit to control the duty cycle of the switch in the target voltage conversion circuit. For example, when the input current of the target voltage conversion circuit is greater than or equal to the current threshold of the target voltage conversion circuit, the control circuit 103 may generate, based on the current threshold of the target voltage conversion circuit, a reference value less than the current threshold, and generate, by using the input current of the target voltage conversion circuit as a variable that needs to be regulated, the switching-modulation signal to control the duty cycle of the switch in the target voltage conversion circuit based on the switching-modulation signal, to regulate the input current in the target voltage conversion circuit to be less than the current threshold (namely, the foregoing reference value) of the target voltage conversion circuit. Herein, the control circuit 103 may generate a signal such as a pulse width modulation (Pulse Width Modulation, PWM) wave as the switching-modulation signal, or generate a driving pulse signal as the switching-modulation signal based on the PWM wave. Herein, the switching-modulation signal may control the duty cycle of the switch in the target voltage conversion circuit, and further control the input current and/or the input power of the target voltage conversion circuit. For example, the control circuit 103 may reduce the duty cycle of the switch in the target voltage conversion circuit to reduce the input current of the target voltage conversion circuit, to reduce the input power of the target voltage conversion circuit. It may be understood that the control circuit 103 provided in this application may use a discontinuous pulse width modulation (Discontinuous Pulse Width Modulation, DPWM) wave as the switching-modulation signal, or may use another PWM wave (for example, a sinusoidal pulse width modulation (Sinusoidal Pulse Width Modulation, SPWM) wave, a third harmonic injection pulse width modulation (Third Harmonic Injection Pulse Width Modulation, THIPWM) wave, or a carrier-based space vector pulse width modulation (Carrier Based Space Vector Pulse Width Modulation, CBPWM) wave) as the switching-modulation signal, or may use a driving pulse signal generated based on these PWM waves as the switching-modulation signal. An application range is wide, and a control effect is good.

In some feasible implementations, the control circuit 103 may be further configured to: when the input current of the target voltage conversion circuit is less than the current threshold of the target voltage conversion circuit, regulate the duty cycle of the switch in the target voltage conversion circuit to regulate turn-on or turn-off of the switch in the target voltage conversion circuit, so that the input power of the target voltage conversion circuit remains at maximum target input power. Refer back to FIG. 4. After the current threshold of the target voltage conversion circuit is obtained, it is assumed that the output parameter (for example, the output current and the output voltage) of the group of photovoltaic panels connected to the target voltage conversion circuit corresponds to the point B in the volt-ampere characteristic curve of the group of photovoltaic panels in FIG. 4. When the output current Ib of the photovoltaic panel corresponding to the point B (namely, the input current of the target voltage conversion circuit) is less than the current threshold (for example, a third current threshold) of the target voltage conversion circuit, it may be considered that the target voltage conversion circuit is in a working state in which the input power does not need to be reduced (or in other words, the switch in the target voltage conversion circuit works in a safe environment at a low risk of damage). In this case, the control circuit 103 may regulate the duty cycle of the switch in the target voltage conversion circuit, so that the input power of the target voltage conversion circuit remains at the maximum target input power (for example, the photovoltaic panel connected to the target voltage conversion circuit works at a maximum power point). Herein, a value of the third current threshold may be determined based on the maximum input current of the switch in the target voltage conversion circuit (for example, determined based on the corresponding nominal currents when the switches of various models bear the different voltage differences), or may be determined based on the current threshold obtained by the photovoltaic inverter in the manner of obtaining, acquiring, receiving, detecting, storing, or the like. For example, the photovoltaic inverter or the external central control system may calculate the curve of the corresponding current thresholds when the switch bears the different voltage differences at the specific working temperature or in the specific working temperature range (for example, in the first working temperature range greater than or equal to the temperature threshold, or the second working temperature range less than the temperature threshold) in the working process (or the design process) of the voltage conversion circuit. Further, the control circuit 103 may obtain the third current threshold based on the curve. The third current threshold may be specifically set based on the application scenario. It may be understood that the third current threshold herein may be one current, may be a plurality of discrete currents, or may be a current range including a plurality of discrete currents or continuous currents. For example, in the first working temperature range greater than or equal to the temperature threshold, the third current threshold may be less than or equal to the first current threshold. For another example, in the second working temperature range less than the temperature threshold, the third current threshold may be less than or equal to the second current threshold.

It may be understood that when the third voltage threshold is less than the first current threshold (or the second current threshold), the photovoltaic inverter can avoid repeatedly reducing or increasing the input power of the target voltage conversion circuit through the control circuit 103 when the input current of the target voltage conversion circuit is not stably less than the first current threshold (or the second current threshold). In other words, when the third voltage threshold is less than the first current threshold (or the second current threshold), after the input current of the target voltage conversion circuit is stable (for example, stably less than the third current threshold), the target voltage conversion circuit of the photovoltaic inverter may be in the working state in which the input power does not need to be reduced (or in other words, the switch in the target voltage conversion circuit works in a safe environment at a low risk of damage). In this case, the control circuit 103 may regulate the duty cycle of the switch in the target voltage conversion circuit, so that the input power of the target voltage conversion circuit remains at the maximum target input power (for example, the photovoltaic panel connected to the target voltage conversion circuit works at the maximum power point). This improves the power supply efficiency.

In some feasible implementations, the inverter circuit may include a switch (for example, a multi-level inverter circuit and a topology circuit thereof). Refer to FIG. 6. FIG. 6 is a schematic diagram of another structure of a photovoltaic inverter according to an embodiment of this application. As shown in FIG. 6, an inverter circuit 201 includes two capacitors connected in series, four switches connected in series, and two diodes connected in series reversely. Connections and working principles of voltage conversion circuits, an acquisition circuit 202, and a control circuit 203 in FIG. 3 are the same as those of the voltage conversion circuit, the acquisition circuit 102, and the control circuit 103 in FIG. 3, and details are not described herein again. Herein, the control circuit 203 may be further configured to: when the voltage of the bus (bus) is greater than or equal to a bus voltage threshold, regulate a duty cycle of a switch in the inverter circuit 201 to regulate turn-on or turn-off of the switch in the inverter circuit 201, to reduce output power of the inverter circuit 201. It may be understood that the control circuit 203 may determine a working state of the photovoltaic inverter in a plurality of manners, and further determine whether output power (or an output current) of the photovoltaic inverter (for example, the inverter circuit 201) needs to be controlled. For example, when the voltage of the bus (bus) is greater than or equal to the bus voltage threshold, it may be considered that the inverter circuit 201 is in a working state in which the output power needs to be reduced (or in other words, each element in the photovoltaic inverter works in a harsh environment, and will be damaged at a high risk if continuing to work). In this case, the control circuit 203 needs to reduce an output current and/or output power of the inverter circuit 201. It may be understood that the bus voltage threshold herein may be one voltage, may be a plurality of discrete voltages, or may be a voltage range including a plurality of discrete voltages or consecutive voltages.

In this application, when the voltage of the bus (bus) is high (for example, the voltage of the bus (bus) is greater than or equal to the bus voltage threshold), it indicates that the photovoltaic inverter is in the working state in which the output power needs to be reduced. The control circuit 203 may reduce the duty cycle of each switch in the inverter circuit 201, and further reduce the output power of the inverter circuit 201, to avoid the element in the photovoltaic inverter being damaged by overheat and further improve the power supply safety.

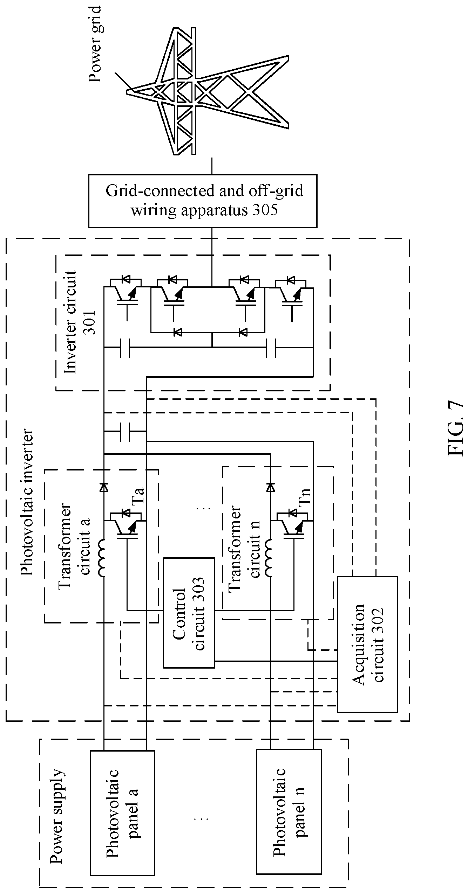

This application further provides a photovoltaic system. For details, refer to FIG. 7 together. FIG. 7 is a schematic diagram of a structure of a photovoltaic system according to an embodiment of this application. As shown in FIG. 7, the photovoltaic system may include a power supply and a photovoltaic inverter. The photovoltaic inverter herein is applicable to the photovoltaic inverters shown in FIG. 1 to FIG. 6. In FIG. 7, only the photovoltaic inverter shown in FIG. 3 is used as an example for description. It may be understood that a mode of connection and working principles of an inverter circuit 301, voltage conversion circuits, an acquisition circuit 302, and a control circuit 303 in FIG. 7 are the same as those of the inverter circuit 101, the voltage conversion circuits, the acquisition circuit 102, and the control circuit 103 in FIG. 3. Details are not described herein again. In the photovoltaic system shown in FIG. 7, a load herein may be a power grid. The photovoltaic system may further include a grid-connected and off-grid wiring apparatus 305. The photovoltaic inverter may supply, through the grid-connected and off-grid wiring apparatus 305, power to utilization equipment or power transmission equipment in the power grid, such as a transmission line, a power transfer station, a battery, a communication base station, or household equipment.

In this application, composition modes of function modules in the photovoltaic inverter, the photovoltaic system, and a photovoltaic power system are diversified, flexible, and adaptable to different power supply environments. Therefore, diversity of application scenarios of the photovoltaic system is improved, and adaptability of the photovoltaic system is enhanced. In addition, according to any photovoltaic system or photovoltaic inverter shown in FIG. 1 to FIG. 7, when the input current of the target voltage conversion circuit is greater than or equal to the current threshold of the target voltage conversion circuit, the control circuit may regulate the duty cycle of the switch to reduce the input power of the voltage conversion circuit, thereby improving stability and power supply efficiency of the photovoltaic inverter while ensuring power supply safety. The structure is simple, the method is simple, and the applicability is high. For ease of description, the following uses a structure of the photovoltaic inverter shown in FIG. 3 as an example to describe the power control method provided in embodiments of this application.

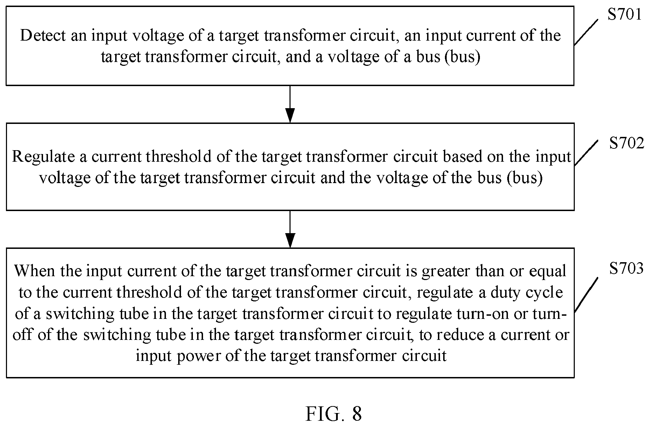

Refer to FIG. 8. FIG. 8 is a schematic flowchart of a power control method according to this application. The control method provided in this application is applicable to a photovoltaic system or a photovoltaic inverter. The photovoltaic system herein may include an inverter circuit and a plurality of voltage conversion circuits. One end of each voltage conversion circuit is configured to be connected to a photovoltaic panel. The other end of each voltage conversion circuit is configured to be connected in parallel to a bus (bus) and then connected to a load through the inverter circuit. Herein, the photovoltaic system and the photovoltaic inverter also include but are not limited to any photovoltaic system shown in FIG. 1 to FIG. 7 or the photovoltaic inverter in the photovoltaic system. As shown in FIG. 8, the power control method provided in this application includes the following steps.

S701: Detect an input voltage of a target voltage conversion circuit, an input current of the target voltage conversion circuit, and a voltage of the bus (bus).

S702: Regulate a current threshold of the target voltage conversion circuit based on the input voltage of the target voltage conversion circuit and the voltage of the bus (bus).

S703: When the input current of the target voltage conversion circuit is greater than or equal to the current threshold of the target voltage conversion circuit, regulate a duty cycle of a switch in the target voltage conversion circuit to regulate turn-on or turn-off of the switch in the target voltage conversion circuit, to reduce a current or input power of the target voltage conversion circuit.

In this application, a photovoltaic panel may be connected to a load as a direct current power supply through a photovoltaic inverter. The photovoltaic inverter may convert direct current energy provided by the photovoltaic panel into alternating current energy, and provide the alternating current energy for the load. Herein, the photovoltaic inverter may include an inverter circuit and a plurality of voltage conversion circuits. The direct current power supply may include a plurality of groups of photovoltaic panels (each group of photovoltaic panels may include one photovoltaic panel or a plurality of photovoltaic panels). Each group of photovoltaic panels may be connected to the inverter circuit through one corresponding voltage conversion circuit. The voltage conversion circuit may convert a direct current voltage provided by the photovoltaic panel into a bus (bus) voltage, and then convert direct current energy into alternating current energy through the inverter circuit, so that an alternating current voltage output by the photovoltaic inverter may adapt to loads in a plurality of voltage ranges. In an application scenario including a plurality of groups of photovoltaic panels, there is a difference between the groups of photovoltaic panels (for example, lengths are different, shapes are different, or light intensities are different). Therefore, when a difference between an output voltage of a photovoltaic panel connected to a (or some) voltage conversion circuit (namely, an input voltage of the voltage conversion circuit) and a bus (bus) voltage is excessively large, an input current in the voltage conversion circuit is usually high. Consequently, a fault or damage may be brought to an element in the voltage conversion circuit (for example, a switch in the voltage conversion circuit) due to overvoltage (a voltage difference is excessively large), overcurrent (a current is excessively high), or overheat (a temperature is excessively high). Herein, the photovoltaic inverter may further include a control circuit and an acquisition circuit. The acquisition circuit may detect a power supply parameter of the photovoltaic inverter (for example, an input voltage and/or an output voltage of the voltage conversion circuit, an input current and/or an output current of the voltage conversion circuit, a temperature of the voltage conversion circuit, a voltage and/or a current of a bus (bus), an input voltage and/or an output voltage of the inverter circuit, an input current and/or an output current of the inverter circuit, and a temperature of the inverter circuit). Herein, the control circuit may determine a working state of the photovoltaic inverter based on the power supply parameter of the photovoltaic inverter. Herein, an example in which one (or more) voltage conversion circuit that needs to be controlled by the control circuit is a target voltage conversion circuit is used. The control circuit may regulate a current threshold of the target voltage conversion circuit based on an input voltage of the target voltage conversion circuit and the voltage of the bus (bus). After the current threshold of the target voltage conversion circuit is obtained, when an input current of the target voltage conversion circuit is greater than or equal to the current threshold of the target voltage conversion circuit, to protect working safety of the voltage conversion circuit, the control circuit may regulate a duty cycle of a switch in the target voltage conversion circuit (for example, reduce the duty cycle of the switch in the target voltage conversion circuit) to regulate turn-on or turn-off of the switch in the target voltage conversion circuit, to reduce a current or input power of the target voltage conversion circuit.

According to this application, when the input current of the target voltage conversion circuit is greater than or equal to the current threshold of the target voltage conversion circuit, the photovoltaic inverter may regulate the duty cycle of the switch through the control circuit to reduce the input power of the voltage conversion circuit, thereby improving stability and power supply efficiency of the photovoltaic inverter while ensuring power supply safety. A structure is simple, a method is simple, and applicability is high.

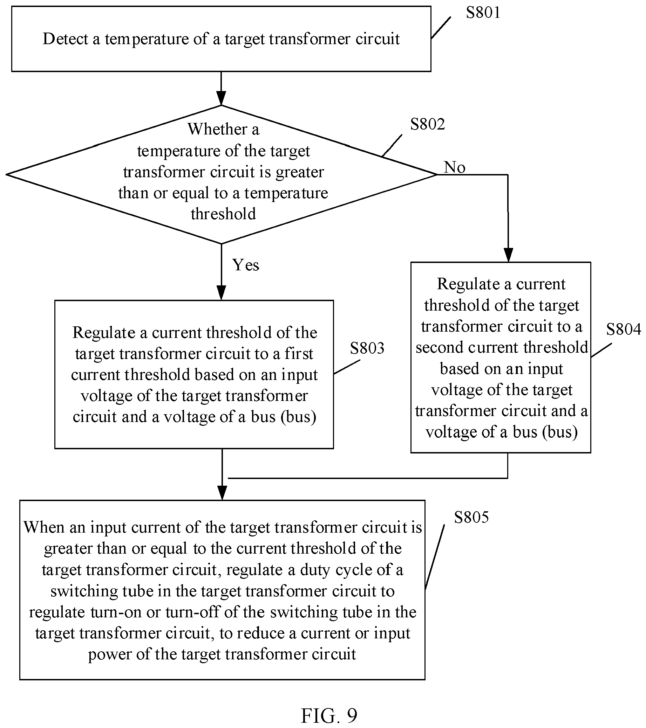

In some feasible implementations, refer to FIG. 9 together. FIG. 9 is another schematic flowchart of a power control method according to this application. As shown in FIG. 9, after performing step S701 of detecting an input voltage of a target voltage conversion circuit, an input current of the target voltage conversion circuit, and a voltage of the bus (bus), the control circuit (or the photovoltaic inverter) may determine the current threshold of the target voltage conversion circuit based on the input voltage of the target voltage conversion circuit and the input current of the target voltage conversion circuit. The power control method may further include the following steps.

S801: Detect a temperature of the target voltage conversion circuit.

S802: Determine whether the temperature of the target voltage conversion circuit is greater than or equal to the temperature threshold. If a determining result is yes, step S803 is performed; or if a determining result is no, step S804 is performed.

It may be understood that the control circuit may determine a working state of the target voltage conversion circuit in a plurality of manners, and further determine whether the input power (or the input current) of the target voltage conversion circuit needs to be controlled. In other words, the control circuit may determine the working state of the target voltage conversion circuit in the plurality of manners, and further determine whether the duty cycle of the switch in the target voltage conversion circuit needs to be regulated. For example, when the input current of the target voltage conversion circuit is greater than or equal to the current threshold of the target voltage conversion circuit, it may be considered that the target voltage conversion circuit is in a working state in which the input power needs to be reduced (or in other words, the switch in the target voltage conversion circuit works in a harsh environment, and will be damaged at a high risk if continuing to work). In this case, the control circuit needs to reduce the input current and/or the input power of the target voltage conversion circuit. Herein, when a working temperature of the switch in the target voltage conversion circuit is different, an input current bearable by the switch may be different even if a voltage difference borne by the switch is the same.

S803: Regulate the current threshold of the target voltage conversion circuit to a first current threshold based on the input voltage of the target voltage conversion circuit and the voltage of the bus (bus).

Herein, when the working temperature of the switch in the target voltage conversion circuit is high (for example, the temperature of the target voltage conversion circuit is greater than or equal to the temperature threshold), the control circuit may determine, based on the voltage difference (for example, a difference between the input voltage of the target voltage conversion circuit and the voltage of the bus (bus)) borne by the switch in the target voltage conversion circuit, a maximum input current (for example, the first current threshold) bearable by the switch in the target voltage conversion circuit. It should be noted that a value of the first current threshold may be determined based on the maximum input current of the switch in the target voltage conversion circuit (for example, determined based on corresponding nominal currents when switches of various models bear different voltage differences), or may be determined based on the current threshold obtained by the photovoltaic inverter in a manner of obtaining, acquiring, receiving, detecting, storing, or the like. For example, the photovoltaic inverter or an external central control system may calculate a curve of corresponding current thresholds when the switch bears different voltage differences at a specific working temperature or in a specific working temperature range (for example, in a first working temperature range greater than or equal to the temperature threshold) in a working process (or a design process) of the voltage conversion circuit. Further, the control circuit may obtain the first current threshold based on the curve. The first current threshold may be specifically set based on an application scenario. It may be understood that the first current threshold herein may be one current, may be a plurality of discrete currents, or may be a current range including a plurality of discrete currents or continuous currents.

In this application, when the working temperature of the switch in the target voltage conversion circuit is high (for example, the temperature of the target voltage conversion circuit is greater than or equal to the temperature threshold), if an input current of the switch in the target voltage conversion circuit is greater than or equal to the first current threshold, it indicates that the target voltage conversion circuit is in a working state in which the target voltage conversion circuit needs to be regulated, and the control circuit may reduce the duty cycle of the switch in the target voltage conversion circuit to further reduce the input power of the target voltage conversion circuit, to avoid an element in the target voltage conversion circuit being damaged by overheat and improve safety of the target voltage conversion circuit. In addition, the control circuit does not completely cut off input electric energy of the target voltage conversion circuit. This ensures electric energy transmission efficiency on the basis of ensuring safety.

S804: Regulate the current threshold of the target voltage conversion circuit to a second current threshold based on the input voltage of the target voltage conversion circuit and the voltage of the bus (bus).

Herein, when the working temperature of the switch in the target voltage conversion circuit is low (for example, the temperature of the target voltage conversion circuit is less than the temperature threshold), the control circuit may determine, based on the voltage difference (for example, the difference between the input voltage of the target voltage conversion circuit and the voltage of the bus (bus)) borne by the switch in the target voltage conversion circuit, the maximum input current (for example, the second current threshold) bearable by the switch in the target voltage conversion circuit. Herein, the second current threshold is less than or equal to the first voltage threshold. It should be noted that a value of the second current threshold may be determined based on the maximum input current of the switch in the target voltage conversion circuit (for example, determined based on the corresponding nominal currents when the switches of the various models bear the different voltage differences), or may be determined based on the current threshold obtained by the photovoltaic inverter in the manner of obtaining, acquiring, receiving, detecting, storing, or the like. For example, the photovoltaic inverter or the external central control system may calculate the curve of the corresponding current thresholds when the switch bears the different voltage differences at the specific working temperature or in the specific working temperature range (for example, in a second working temperature range less than the temperature threshold) in the working process (or the design process) of the voltage conversion circuit. Further, the control circuit may obtain the second current threshold based on the curve. The second current threshold may be specifically set based on the application scenario. It may be understood that the second current threshold herein may be one current, may be a plurality of discrete currents, or may be a current range including a plurality of discrete currents or continuous currents.

In this application, when the working temperature of the switch in the target voltage conversion circuit is low (for example, the temperature of the target voltage conversion circuit is less than the temperature threshold), if the input current of the switch in the target voltage conversion circuit is greater than or equal to the second current threshold, it indicates that the target voltage conversion circuit is in the working state in which the target voltage conversion circuit needs to be regulated, and the control circuit may reduce the duty cycle of the switch in the target voltage conversion circuit to further reduce the input power of the target voltage conversion circuit, to avoid the element in the target voltage conversion circuit being damaged by overheat and improve safety of the target voltage conversion circuit. In addition, the control circuit does not completely cut off input electric energy of the target voltage conversion circuit. This ensures electric energy transmission efficiency on the basis of ensuring safety.

S805: When the input current of the target voltage conversion circuit is greater than or equal to the current threshold of the target voltage conversion circuit, regulate the duty cycle of the switch in the target voltage conversion circuit to regulate turn-on or turn-off of the switch in the target voltage conversion circuit, to reduce the current or the input power of the target voltage conversion circuit.

In some feasible implementations, when the input current of the target voltage conversion circuit is greater than or equal to the current threshold of the target voltage conversion circuit, a switching-modulation signal is generated based on the input current of the target voltage conversion circuit and the current threshold of the target voltage conversion circuit, and the duty cycle of the switch in the target voltage conversion circuit is controlled based on the switching-modulation signal to regulate turn-on or turn-off of the switch in the target voltage conversion circuit.

Herein, the control circuit (for example, a current regulation loop (for example, a proportional regulation circuit or a proportional integral regulation circuit) and a driving-control circuit, or another circuit with a current regulation function and a driving-control function) may generate the switching-modulation signal based on the input current of the target voltage conversion circuit and the current threshold of the target voltage conversion circuit to control the duty cycle of the switch in the target voltage conversion circuit. For example, the control circuit may generate a signal such as a pulse width modulation (Pulse Width Modulation, PWM) wave as the switching-modulation signal, or generate a driving pulse signal as the switching-modulation signal based on the PWM wave. Herein, the switching-modulation signal may control the duty cycle of the switch in the target voltage conversion circuit, and further control the input current and/or the input power of the target voltage conversion circuit. For example, the control circuit may reduce the duty cycle of the switch in the target voltage conversion circuit to reduce the input current of the target voltage conversion circuit, to reduce the input power of the target voltage conversion circuit. It may be understood that the control circuit provided in this application may use a discontinuous pulse width modulation (Discontinuous Pulse Width Modulation, DPWM) wave as the switching-modulation signal, or may use another PWM wave (for example, a sinusoidal pulse width modulation (Sinusoidal Pulse Width Modulation, SPWM) wave, a third harmonic injection pulse width modulation (Third Harmonic Injection Pulse Width Modulation, THIPWM) wave, or a carrier-based space vector pulse width modulation (Carrier Based Space Vector Pulse Width Modulation, CBPWM) wave) as the switching-modulation signal, or may use a driving pulse signal generated based on these PWM waves as the switching-modulation signal. An application range is wide, and a control effect is good.

In some feasible implementations, after step S702 or S803 or S804 of regulating a current threshold of the target voltage conversion circuit based on the input voltage of the target voltage conversion circuit and the voltage of the bus (bus) is performed, the method may further include:
when the input current of the target voltage conversion circuit is less than the current threshold of the target voltage conversion circuit, regulating the duty cycle of the switch in the target voltage conversion circuit to regulate turn-on or turn-off of the switch in the target voltage conversion circuit, so that the input power of the target voltage conversion circuit remains at maximum target input power.

Herein, when the input current of the target voltage conversion circuit is less than the current threshold (for example, a third current threshold) of the target voltage conversion circuit, it may be considered that the target voltage conversion circuit is in a working state in which the input power does not need to be reduced (or in other words, the switch in the target voltage conversion circuit works in a safe environment at a low risk of damage). In this case, the control circuit may regulate the duty cycle of the switch in the target voltage conversion circuit, so that the input power of the target voltage conversion circuit remains at the maximum target input power (for example, the photovoltaic panel connected to the target voltage conversion circuit works at a maximum power point). Herein, a value of the third current threshold may be determined based on the maximum input current of the switch in the target voltage conversion circuit (for example, determined based on the corresponding nominal currents when the switches of various models bear the different voltage differences), or may be determined based on the current threshold obtained by the photovoltaic inverter in the manner of obtaining, acquiring, receiving, detecting, storing, or the like. For example, the photovoltaic inverter or the external central control system may calculate the curve of the corresponding current thresholds when the switch bears the different voltage differences at the specific working temperature or in the specific working temperature range (for example, in the first working temperature range greater than or equal to the temperature threshold, or the second working temperature range less than the temperature threshold) in the working process (or the design process) of the voltage conversion circuit. Further, the control circuit may obtain the third current threshold based on the curve. The third current threshold may be specifically set based on the application scenario. It may be understood that the third current threshold herein may be one current, may be a plurality of discrete currents, or may be a current range including a plurality of discrete currents or continuous currents. For example, in the first working temperature range greater than or equal to the temperature threshold, the third current threshold may be less than or equal to the first current threshold. For another example, in the second working temperature range less than the temperature threshold, the third current threshold may be less than or equal to the second current threshold. When the third voltage threshold is less than the first current threshold (or the second current threshold), the photovoltaic inverter can avoid repeatedly reducing or increasing the input power of the target voltage conversion circuit through the control circuit when the input current of the target voltage conversion circuit is not stably less than the first current threshold (or the second current threshold). In other words, when the third voltage threshold is less than the first current threshold (or the second current threshold), after the input current of the target voltage conversion circuit is stable (for example, stably less than the third current threshold), the target voltage conversion circuit of the photovoltaic inverter may be in the working state in which the input power does not need to be reduced (or in other words, the switch in the target voltage conversion circuit works in a safe environment at a low risk of damage). In this case, the control circuit may regulate the duty cycle of the switch in the target voltage conversion circuit, so that the input power of the target voltage conversion circuit remains at the maximum target input power (for example, the photovoltaic panel connected to the target voltage conversion circuit works at the maximum power point). This improves the power supply efficiency.

In some feasible implementations, after the input voltage of the target voltage conversion circuit, the input current of the target voltage conversion circuit, and the voltage of bus (bus) are detected, the method may further include:
when the voltage of the bus (bus) is greater than or equal to a bus voltage threshold, regulating a duty cycle of the switch in the inverter circuit to regulate turn-on or turn-off of the switch in the inverter circuit, to reduce output power of the inverter circuit.

It may be understood that the control circuit may determine the working state of the photovoltaic inverter in a plurality of manners, and further determine whether output power (or an output current) of the photovoltaic inverter (for example, the inverter circuit) needs to be controlled. For example, when the voltage of the bus (bus) is greater than or equal to the bus voltage threshold, it may be considered that the inverter circuit is in a working state in which the output power needs to be reduced (or in other words, each element in the photovoltaic inverter works in a harsh environment, and will be damaged at a high risk if continuing to work). In this case, the control circuit needs to reduce the output current and/or the output power of the inverter circuit. It may be understood that the bus voltage threshold herein may be one voltage, may be a plurality of discrete voltages, or may be a voltage range including a plurality of discrete voltages or consecutive voltages.

It may be understood that when the voltage of the bus (bus) is high (for example, the voltage of the bus (bus) is greater than or equal to the bus voltage threshold), it indicates that the photovoltaic inverter is in the working state in which the output power needs to be reduced. The control circuit may reduce the duty cycle of each switch in the inverter circuit, and further reduce the output power of the inverter circuit, to avoid the element in the photovoltaic inverter being damaged by overheat and further improve the power supply safety.

In this application, when the input current of the target voltage conversion circuit is greater than or equal to the current threshold of the target voltage conversion circuit, the photovoltaic inverter may regulate the duty cycle of the switch through the control circuit to reduce the input power of the voltage conversion circuit, thereby improving stability and power supply efficiency of the photovoltaic inverter while ensuring power supply safety. A structure is simple, the method is simple, and applicability is high.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A photovoltaic inverter, wherein the photovoltaic inverter comprises an inverter circuit, a plurality of voltage conversion circuits, a plurality of acquisition circuits, and a control circuit, and one voltage conversion circuit comprises at least one switch;
one end of each voltage conversion circuit is configured to be correspondingly connected to each of a plurality of groups of photovoltaic panels, the other end of each voltage conversion circuit is configured to be connected in parallel to a bus (bus) and then connected to a load through the inverter circuit, the plurality of acquisition circuits are connected to the control circuit and configured to detect voltages or currents of the plurality of voltage conversion circuits and the bus (bus), and the control circuit is connected to the switch in each voltage conversion circuit;
the plurality of acquisition circuits are configured to detect an input voltage of a target voltage conversion circuit and the voltage of the bus (bus), wherein the target voltage conversion circuit is any one or more of the plurality of voltage conversion circuits;
the control circuit is configured to regulate a current threshold of the target voltage conversion circuit based on the input voltage of the target voltage conversion circuit and the voltage of the bus (bus); and
the control circuit is configured to: when an input current of the target voltage conversion circuit is greater than or equal to the current threshold of the target voltage conversion circuit, regulate a duty cycle of the switch in the target voltage conversion circuit to regulate turn-on or turn-off of the switch in the target voltage conversion circuit, to reduce a current or input power of the target voltage conversion circuit.

2. The photovoltaic inverter according to claim 1, wherein the plurality of acquisition circuits are further configured to detect a temperature of the target voltage conversion circuit; and
the control circuit is further configured to: when the temperature of the target voltage conversion circuit is greater than or equal to a temperature threshold, regulate the current threshold of the target voltage conversion circuit to a first current threshold based on the input voltage of the target voltage conversion circuit and the voltage of the bus (bus).

3. The photovoltaic inverter according to claim 2, wherein the control circuit is further configured to: when the temperature of the target voltage conversion circuit is less than the temperature threshold, regulate the current threshold of the target voltage conversion circuit to a second current threshold based on the input voltage of the target voltage conversion circuit and the voltage of the bus (bus), wherein the second current threshold is greater than or equal to the first current threshold.

4. The photovoltaic inverter according to any one of claims 1 to 3, wherein the control circuit is further configured to: when the input current of the target voltage conversion circuit is greater than or equal to the current threshold of the target voltage conversion circuit, generate a switching-modulation signal based on the input current of the target voltage conversion circuit and the current threshold of the target voltage conversion circuit, and control turn-on or turn-off of the switch in the target voltage conversion circuit based on the switching-modulation signal to regulate the duty cycle of the switch in the target voltage conversion circuit.

5. The photovoltaic inverter according to any one of claims 1 to 4, wherein the control circuit is further configured to: when the input current of the target voltage conversion circuit is less than the current threshold of the target voltage conversion circuit, regulate turn-on or turn-off of the switch in the target voltage conversion circuit to regulate the duty cycle of the switch in the target voltage conversion circuit, so that the input power of the target voltage conversion circuit remains at maximum target input power.

6. The photovoltaic inverter according to any one of claims 1 to 5, wherein the inverter circuit comprises a switch; and the control circuit is further configured to: when the voltage of the bus (bus) is greater than or equal to a bus voltage threshold, regulate a duty cycle of the switch in the inverter circuit to regulate turn-on or turn-off of the switch in the inverter circuit, reduce output power of the inverter circuit.

7. A power control method, wherein the control method is applicable to a photovoltaic system, and the photovoltaic system comprises an inverter circuit and a plurality of voltage conversion circuits, wherein
one end of each voltage conversion circuit is configured to be connected to a photovoltaic panel, the other end of each voltage conversion circuit is configured to be connected in parallel to a bus (bus) and then connected to a load through the inverter circuit, and the method comprises:
detecting an input voltage of a target voltage conversion circuit, an input current of the target voltage conversion circuit, and a voltage of the bus (bus), wherein the target voltage conversion circuit is any one or more of the plurality of voltage conversion circuits;
regulating a current threshold of the target voltage conversion circuit based on the input voltage of the target voltage conversion circuit and the voltage of the bus (bus); and
when the input current of the target voltage conversion circuit is greater than or equal to the current threshold of the target voltage conversion circuit, regulating a duty cycle of a switch in the target voltage conversion circuit to regulate turn-on or turn-off of the switch in the target voltage conversion circuit, to reduce a current or input power of the target voltage conversion circuit.

8. The control method according to claim 7, wherein the regulating a current threshold of the target voltage conversion circuit based on the input voltage of the target voltage conversion circuit and the voltage of the bus (bus) comprises:
detecting a temperature of the target voltage conversion circuit; and
when the temperature of the target voltage conversion circuit is greater than or equal to a temperature threshold, regulating the current threshold of the target voltage conversion circuit to a first current threshold based on the input voltage of the target voltage conversion circuit and the voltage of the bus (bus).

9. The control method according to claim 8, wherein after the detecting a temperature of the target voltage conversion circuit, the method further comprises:
when the temperature of the target voltage conversion circuit is less than the temperature threshold, regulating the current threshold of the target voltage conversion circuit to a second current threshold based on the input voltage of the target voltage conversion circuit and the voltage of the bus (bus), wherein the second current threshold is greater than or equal to the first current threshold.

10. The control method according to any one of claims 7 to 9, wherein after the regulating a current threshold of the target voltage conversion circuit based on the input voltage of the target voltage conversion circuit and the voltage of the bus (bus), the method further comprises:
when the input current of the target voltage conversion circuit is greater than or equal to the current threshold of the target voltage conversion circuit, generating a switching-modulation signal based on the input current of the target voltage conversion circuit and the current threshold of the target voltage conversion circuit, and controlling the duty cycle of the switch in the target voltage conversion circuit based on the switching-modulation signal to regulate turn-on or turn-off of the switch in the target voltage conversion circuit.

11. The control method according to any one of claims 7 to 10, wherein after the regulating a current threshold of the target voltage conversion circuit based on the input voltage of the target voltage conversion circuit and the voltage of the bus (bus), the method further comprises:
when the input current of the target voltage conversion circuit is less than the current threshold of the target voltage conversion circuit, regulating the duty cycle of the switch in the target voltage conversion circuit to regulate turn-on or turn-off of the switch in the target voltage conversion circuit, so that the input power of the target voltage conversion circuit remains at maximum target input power.

12. The control method according to any one of claims 7 to 11, wherein the inverter circuit comprises a switch; and after the detecting an input voltage of a target voltage conversion circuit, an input current of the target voltage conversion circuit, and a voltage of the bus (bus), the method further comprises:
when the voltage of the bus (bus) is greater than or equal to a bus voltage threshold, regulating a duty cycle of the switch in the inverter circuit to regulate turn-on or turn-off of the switch in the inverter circuit, to reduce output power of the inverter circuit.
